(19) Europäisches Patentamt
European Patent Office
Office européen des brevets

(11) EP 3 517 559 B1

(12) **EUROPEAN PATENT SPECIFICATION**

(45) Date of publication and mention of the grant of the patent:
**24.02.2021 Bulletin 2021/08**

(21) Application number: **17853176.0**

(22) Date of filing: **22.09.2017**

(51) Int Cl.:
***C08G 18/80*** *(2006.01)* ***C08G 18/00*** *(2006.01)*
***C08G 18/08*** *(2006.01)* ***C08G 18/38*** *(2006.01)*
***C08G 65/335*** *(2006.01)* ***C08K 5/521*** *(2006.01)*
***C08L 71/02*** *(2006.01)* ***C08L 75/04*** *(2006.01)*
***C09D 5/02*** *(2006.01)* ***C09D 175/04*** *(2006.01)*
***C08G 18/62*** *(2006.01)*

(86) International application number:
**PCT/JP2017/034359**

(87) International publication number:
**WO 2018/056408 (29.03.2018 Gazette 2018/13)**

(54) **POLYISOCYANATE COMPOSITION, BLOCK POLYISOCYANATE COMPOSITION, COATING COMPOSITION, AQUEOUS COATING COMPOSITION, AND COATING BASE MATERIAL**

POLYISOCYANATZUSAMMENSETZUNG, BLOCKPOLYISOCYANATZUSAMMENSETZUNG, BESCHICHTUNGSZUSAMMENSETZUNG, WÄSSRIGE BESCHICHTUNGSZUSAMMENSETZUNG UND BESCHICHTUNGSBASISMATERIAL

COMPOSITION DE POLYISOCYANATE, COMPOSITION DE POLYISOCYANATE À BLOCS, COMPOSITION DE REVÊTEMENT, COMPOSITION AQUEUSE DE REVÊTEMENT, ET MATÉRIAU DE SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2016 JP 2016186108**
**23.09.2016 JP 2016186109**

(43) Date of publication of application:
**31.07.2019 Bulletin 2019/31**

(73) Proprietor: **ASAHI KASEI KABUSHIKI KAISHA**
**Tokyo 100-0006 (JP)**

(72) Inventors:
- **SHINOMIYA, Kie**
  **Tokyo 101-8101 (JP)**
- **FUKUCHI, Takashi**
  **Tokyo 101-8101 (JP)**
- **HONG, Changfeng**
  **Tokyo 101-8101 (JP)**

(74) Representative: **Strehl Schübel-Hopf & Partner**
**Maximilianstrasse 54**
**80538 München (DE)**

(56) References cited:
**EP-A2- 1 710 261** **WO-A1-98/56843**
**WO-A1-2008/023690** **WO-A1-2016/146579**
**JP-A- H05 202 162** **JP-A- 2016 102 196**
**US-A- 4 257 995** **US-A1- 2007 043 152**
**US-A1- 2007 055 037** **US-A1- 2008 257 214**
**US-A1- 2009 076 240** **US-A1- 2010 168 297**
**US-A1- 2012 041 142** **US-A1- 2012 101 210**
**US-B2- 8 188 171**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 517 559 B1

**Description**

TECHNICAL FIELD

The present invention relates to a polyisocyanate composition and a blocked polyisocyanate composition.

BACKGROUND OF THE INVENTION

A coating film formed from a urethane coating composition using a polyisocyanate a curing agent is excellent in chemical resistance and flexibility. In particular, in the case where a polyisocyanate obtained from an aliphatic diisocyanate or an alicyclic diisocyanate is used as a curing agent, the resultant coating film is further excellent in weather resistance. Accordingly, the urethane coating composition is used as a room temperature setting two-liquid urethane paint or a thermosetting one-liquid urethane paint in an architectural, thick-anticorrosional, automotive, industrial or refinishing application.

On the other hand, making a polyisocyanate composition to be used as a curing agent in a urethane coating composition be aqueous so as to reduce the load on the global environment has been studied.

However, a polyisocyanate to be used as a curing agent in a two-liquid urethane coating composition is hardly dispersed in water, and tends to react with water to generate carbon dioxide. Accordingly, the development in a polyisocyanate having emulsifying properties and a suppressibility of the reaction of an isocyante group and water even in a water dispersion state has been progressed.

For example, Patent Document 1 discloses a polyisocyanate mixture dispersible in water, which contains a polyisocyanate compound and a polyether having an ethylene oxide unit. Patent Document 2 discloses a polyisocyanate composition having a high emulsifying property, the polyisocyanate composition being obtained by reacting an isocyanate prepolymer obtained from an aliphatic or alicyclic diisocyanate and a monoalcohol with a nonionic hydrophilic component.

Patent Document 3 discloses a mixture containing a polyisocyanate and a phosphoric acid ester salt having a poly(oxyalkylene) chain.

The studies relating to a blocked polyisocyanate composition to be used as an aqueous one-liquid urethane coating material have progressed.

Examples of a method for preparing an aqueous blocked polyisocyanate composition include a method in which a hydrophilic compound is added to a blocked polyisocyanate. Examples of the thus prepared aqueous blocked polyisocyanate include aqueous blocked polyisocyanate compositions obtained by adding an ethylene oxide to a blocked polyisocyanate having an isocyanurate structure (see, for example, Patent Documents 4 and 5).

DOCUMENTS OF RELATED ART

Patent Documents

Patent Document 1: Japanese Unexamined Patent Application Publication No. Hei 05-222150
Patent Document 2: Japanese Unexamined Patent Application Publication No. 2000-178335
Patent Document 3: Japanese Translation of PCT International Application Publication No. 2006-522852
Patent Document 4: Japanese Translation of PCT International Application Publication No. Hei 11-512772
Patent Document 5: Japanese Translation of PCT International Application Publication No. 2002-511507

SUMMARY OF THE INVENTION

PROBLEMS TO BE SOLVED BY THE INVENTION

An aqueous two-liquid urethane coating composition is used in woodworking, architectural, or industrial application. In these applications, the two-liquid urethane coating composition is often prepared on site by conducting stirring by hands. An aqueous two-liquid urethane coating composition which exhbits favorable dispersibility and realizes good coating fiml external appearance even by hand-stirring has been required.

However, even the polyisocyanate compositions disclosed in Patent Documents 1, 2, and 3 are insufficient to realize both favorable water dispersibility by hand-stirring and good external appearance with hardness of the resulting coating film.

Although a blocked polyisocyanate composition to which a hydrophilic compound is added realizes a water dispersibility by adding the hydrophilic compound, the blocked polyisocyanate composition has additional problems to

realize the long-term stability of the water dispersibility as well as the gloss, adhesiveness, and water resistance of the coating film.

Although there is a tendency that the aqueous blocked polyisocyanate compositions disclosed in Patent Documents 4 and 5 form a sufficiently-crosslinked coating film, the dispersibility thereof in water is insufficient, and there is a further problem in terms of the long-term storage stability of the aqueous dispersion thereof.

Thus, the present invention aims to provide a polyisocyanate composition that can realize a favorable water dispersibility as well as a favorable external appearance with hardness of the resulting coating film, and an aqueous blocked polyisocyanate composition that can realize a long-term storage stability of an aqueous dispersion of a blocked polyisocyanate composition as well as excellent gloss, adhesiveness, and water resistance of the resulting coating film.

## MEANS TO SOLVE THE PROBLEMS

The present inventors have made intensive studies in order to solve the above problems of the prior art, found that a polyisocyanate composition containing a poly(oxyalkylene) alkylether phosphate is excellent in the resistant to yellowing upon baking, the gloss, and the hardness, when used as a coating composition, and that the blocked polyisocyanate composition containing a poly(oxyalkylene) alkylether phosphate is excellent in the long-term storage stability and is excellent in the gloss, the adhesiveness, and the water resistance when used as a coating composition, and thereby completed the present invention.

The present invention is defined in the appended claims.

## EFFECTS OF THE INVENTION

According to the present invention, it is possible to provide a polyisocyanate composition and a blocked polyisocyanate composition, which exhibit excellent water dispersibility and realize a coating film excellent in external appearance and hardness.

## EMBODIMENTS FOR CARRYING OUT THE INVENTION

Embodiments of the present invention will be explained below in detail.

### <Polyisocyanate composition>

A polyisocyanate composition according to the first embodiment of the present invention contains a polyisocyanate and a poly(oxyalkylene) alkylether phosphate. The amount of the poly(oxyalkylene) alkylether phosphate satisfies the peak area ratio, relative to bis(2-ethylhexyl)phosphate, of 0.1 to 9.6, the peak area ratio being determined by LC-MS measurement of a sample prepared by mixing equal amounts of a methanol solution in which the polyisocyanate composition is contained in an amount of 0.03 g/mL and a methanol solution in which the bis(2-ethylhexyl)phosphate contained in an amount of 1000 ppm by mass.

Various properties or characteristics of the polyisocyanate composition of the present embodiment are various properties or characteristics in the state in which the polyisocyanate, the poly(oxyalkylene) alkylether phosphates and other additives are contained, unless otherwise mentioned.

Each components constituting the present invention will be described below.

### [Polyisocyanate]

From the view point of industrially easy availability, the polyisocyanate used in the present embodiment is obtained from at least one selected from the group consisting of aliphatic diisocyanates and alicyclic diisocyanates.

Although the aliphatic diisocyanates are not limited to the followings, examples thereof include: 1,4-diisocyanatobutane, 1,5-diisocyanatopentane, ethyl(2,6-diisocyanato)hexanoate, 1,6-diisocyanatohexane (hereinafter, also referred to as "HDI"), 1,9-diisocyanatononane, 1,12-diisocyanatododecane, and 2,2,4- or 2,4,4-trimethyl-1,6-diisocyanatohexane.

Although the alicyclic diisocyanates are not limited to the followings, examples thereof include 1,3- or 1,4-bis(isocyanatomethyl)cyclohexane (hereinafter, also referred to as "hydrogenated XDI"), 1,3- or 1,4-diisocyanatocyclohexane, 3,5,5-trimethyl-1-isocyanato-3-(isocyanatomethyl)cyclohexane (hereinafter, also referred to as "IPDI"), 4-4'-diisocyanato-dicyclohexylmethane (hereinafter, also referred to as "hydrogenated MDI"), and 2,5- or 2,6-diisocyanatomethylnorbornane.

Among these, HDI, IPDI, hydrogenated XDI, and hydrogenated MDI are more preferable, due to the low yellowing properties thereof.

Although the polyisocyanate derived from the above-mentioned diisocyanates is not limitied to the followings, examples thereof include: polyisocyanate compounds having an uretdione structure obtained by cyclodimerization of two isocyanate groups; polyisocyanate compounds having an isocyanurate structure or an iminooxadiazinedione structure obtained by cyclotrimerization of three isocyanate groups; polyisocyanate compounds having a biuret structure obtained by reaction of three isocyanate groups and a water molecule; polyisocyanate compounds having an oxadiazine trion structure obtained by reaction of two isocyanate groups and a carbon dioxide molecule; polyisocyanate compounds having a plurality of urethane groups obtained by reaction of an isocyanate group and a hydroxyl group; polyisocyanate compounds having an allophanate structure obtained by reaction of two isocyanate groups and a hydroxy group; polyisocyanate compounds having an acylurea group obtained by reaction of an isocyanate group and a carboxyl group; and polyisocyanate compounds having an urea structure obtained by reaction of an isocyanate group and a primary or secondary amine. Additional examples thereof include aliphatic triisocyanates, such as 1,3,6-triisocyanatohexane, 1,8-diisocyanato-4-isocyanatomethyloctane, and 2-isocyanatoethyl-2,6-diisocyanato hexanoate. The meaning of the term "polyisocyanate compound" encompasses a polyisocyanate obtained by reaction of a polyisocyanate derived from the above-mentioned diisocyanates and a compounds other than the diisocyanates (such as alcohol, water, or amine).

The polyisocyanate may be modified with a sulfonic acid amine salt having a hydroxy group or a vinyl polymer having a hydroxy group and a nonionic hydrophilic group. These may be used alone or in combination of at least two thereof.

[Modified polyisocyanate]

The polyisocyanate may be modified by reacting the polyisocyanate with a hydrophilic compound.

The polyisocyanate used in the present embodiment may contain the modified polyisocyanate.

[Hydrophilic compound]

The hydrophilic compound available in the present embodiment is selected from the group consisting of nonionic hydrophilic compounds, anionic hydrophilic compounds, and cationic hydrophilic compounds. Among these, the nonionic hydrophilic compounds or the anionic hydrophilic compounds are preferable, and the nonionic hydrophilic compounds are more preferable, from the viewpoint of production easiness. These hydrophilic compounds may be used alone or in combination of at least two thereof.

Examples of the nonionic hydrophilic compounds in the present embodiment include poly(oxyalkylene) glycols and poly(oxyalkylene) monoalkyl ethers. The poly(oxyalkylene) monoalkyl ethers are preferable from the viewpoint of the decrease in the viscosity of the polyisocyanate composition.

[Poly(oxyalkylene) monoalkyl ether]

Although the poly(oxyalkylene) monoalkyl ether used in the present embodiment is not particularly limited, the poly(oxyalkylene) monoalkyl ether is preferably a compound of formula (2).

$$HO\left(R_3O\right)_n R_4 \qquad (2)$$

In the formula (2), $R_3$ represents an alkylene group having 1 to 4 carbon atoms, and $R_4$ represents an alkyl group having 1 to 4 carbon atoms. The average number of n is 5.0 to 30.

The poly(oxyalkylene) monoalkyl ether is not a single component, but an aggregate of materials having different numbers of n from each other, n indicating a polymerization degree (hereinafter, also referred to as "polymerization degree n" or simply "n") of the materials. Thus, the polymerization degree n is indicated by the average value.

The number average molecular weight of the poly(oxyalkylene) monoalkyl ether is preferably 200 or more, more preferably 300 or more, and even more preferably 400 or more. In the case where the number average molecular weight is 200 or more, there is a tendency that the water dispersibility becomes excellent.

The number average molecular weight is preferably 2000 or less, more preferably 1200 or less, and even more preferably 1000 or less. In the case where the number average molecular weight is 2000 or less, there is a tendency that an excellent hardness is realized whe used as a coating composition.

$R_3$ of the poly(oxyalkylene) monoalkyl ether is an alkylene group having 1 to 4 carbon atoms, from the viewpoint of the provision of hydrophilicity. It is more preferable that $R_3$ be an ethylene group from the viewpoint of the provision of further hydrophilicity. In addition, $R_4$ is an alkyl group having 1 to 4 carbon atoms from the viewpoint of the provision of hydrophilicity. $R_4$ is more preferably a methyl group from the viewpoint of the provision of further hydrophilicity.

The average number of n is preferably 5.0 or more, more preferably 5.2 or more, even more preferably 5.4 or more, and even more preferably 6.0 or mre, from the viewpoint of the water dispersibility, water-dispersion stability and external appearance of a coating film.

In the case where the average number of n is 5.0 or more, the emulsifying capacity is increased, and thereby improving the dispersibility to make it possible to realize easy dispersion. Thus, there is a tendency that the dispersibility in the main agent is further improved and an external appearance of a coating film becomes further excellent.

The average number of n is preferably 30 or less, more preferably 25 or less, even more preferably 20 or less, and even more preferably 15 or less, from the viewpoint of water dispersibility and hardness of a coating film.

In the case where the average number of n is 30 or less, there is a tendency that an excessive increase in the viscosity, such as gelation, can be prevented to realize easy dispersion. In addition, there is a tendency that the hardness of a coating film becomes furher excellent.

Examples of commercially available products of the poly(oxyalkylene) alkyl ether include: trade names of "UNIOX M400", "UNIOX M550", "UNIOX M1000", and "UNIOX M2000", manufactured by Nippon Oil and Fats Company Limited; and trade names of "MPG-081" and "MPG-130", manufactured by Nippon Nyukazai Co., Ltd.

In the case where the poly(oxyalkylene) monoalkyl ether is a compound of formula (2), a modified polyisocyanate group contains a group of formula (2-1).

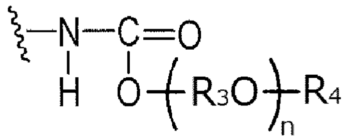

(2 − 1)

In the formula, $R_3$, $R_4$ and n represent the same meanings as those of formula (2) mentioned above, and a wavy line represents a bond.

Examples of the anionic hydrophilic compounds include carboxylic acid group-containing compounds and sulfonic acid group-containing compounds. Examples of the carboxylic acid group-containing compounds include monohydroxy carboxylic acids, dihydroxy carboxylic acids and derivatives thereof. Among the carboxylic acid group-containing compounds, the monohydroxy carboxylic acids or the dihydroxy carboxylic acids are preferable, and the monohydroxy carboxylic acids are more preferable.

In the case where the carboxylic acid group-containing compound is used, it is preferable that neutralization using a neutralizing agent be conducted after the preparation of a (blocked) polyisocyanate composition. Examples of the neutralizing agent include: alkali metals; alkaline earth metals; ammonia; and tertiary amines such as trimethylamine, triethylamine, and dimethylethanolamine.

In the case where the sulfonic acid group-containing compound is used, it is preferable that neutralization using a neutralizing agent be conducted after the preparation of a (blocked) polyisocyanate composition. Examples of the neutralizing agent include: alkali metals; alkaline earth metals; ammonia; and tertiary amines such as trimethylamine, triethylamine, and dimethylethanolamine.

In the case where the carboxylic acid group-containing compound and the sulfonic acid group-containing compound are compared, the carboxylic acid group-containing compound is preferable from the viewpoint of easiness in the preparation thereof and the compatibility in an aqueous coating material.

Examples of the cationic hydrophilic compound include hydroxy group-containing amino compounds.

In the case where the hydroxy group-containing amino compound is used, it is preferable that neutralization using a neutralizing agent be conducted after the preparation of a (blocked) polyisocyanate composition. Examples of the neutralizing agent include organic acids such as acetic acid, propionic acid, butanoic acid, and 2-ethylhexanoic acid.

[Poly(oxyalkylene) monoalkyl ether modification ratio]

In the modified polyisocyanate used in the present embodiment, the ratio (modification ratio) of isocyanate groups modified with polyalkylene glycol alkyl ether, is a ratio of a modified polyalkylene glycol alkyl ether, relative to 100 equivalents of the isocyanate groups of a polyisocyanate used as a raw material. Specifically, the ratio is determined by the peak area ratio between the unmodified polyisocyanate and the modified polyisocyanate, the peak area ratio being obtained by liquid chromatography.

The modification ratio is preferably 0.1% or more, more preferably 1.0% or more, and even more preferably 2.0% or more. In the case where the modification ratio is 0.1% or more, there is a tendency that the interfacial tension decreases to exhibit the water dispersibility.

The modification ratio is preferably 50.0% or less, more preferably 40.0% or less, and even more preferably 30.0% or less. In the case where the modification ratio is the upper limit or less, there is a tendency that the isocyanate

groups used for crosslinking increases to make the hardness favorable.

Although the method for controlling the modification ratio to fall within the above-mentione range is not particularly limited to the followings, examples thereof include a method in which the blend ratio of the poly(oxyalkylene) monoalkyl ether and the polyisocyanate is controlled.

[Poly(oxyalkylene) alkylether phosphate]

Although the poly(oxyalkylene) alkylether phosphate in the present embodiment is not particularly limited, examples thereof include poly(oxyethylene) lauryl ether phosphate, poly(oxyethylene) alkyl (C12-15) ether phosphate, poly(oxyethylene) stearyl ether phosphate, poly(oxyethylene) alkylphenyl ether phosphate, poly(oxyethylene) alkyl ether phosphate, poly(oxyethylene) dialkylphenyl ether phosphate, poly(oxyethylene) phenyl ether phosphate, poly(oxyethylene) sec-alkyl (C12-14) ether phosphate, 2-ethylhexyl phosphate, and poly(oxyethylene) alkyl (C1-2) ether phosphate.

Although the poly(oxyalkylene) alkylether phosphate in the present embodiment is not particularly limited, it is preferable that the poly(oxyalkylene) alkylether phosphate be poly(oxyethylene) alkyl ether phosphate, and more preferably have a structure of formula (1).

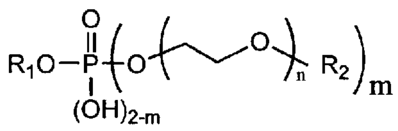

(1)

In the formula (1), $R_1$ and $R_2$ are an alkyl or aralkyl group having 1 to 20 carbon atom and $R_1$ and $R_2$ are identical to or different from each other. n represents an integer of 1 to 30. m represents 1 or 2. It is preferable that $R_1$ and $R_2$ be an alkyl group having 1 to 20 carbon atoms, more preferably an alkyl group having 1 to 15 carbon atoms, and even more preferably an alkyl group having 1 to 10 carbon atoms, from the viewpoint of the compatibility with a main agent when a coating material is prepared.

The repeating unit n of oxyethylene is preferably 2 or more, more preferably 3 or more, and even more preferably 4 or more. In the case where the repeating unit n is 2 or more, there is a tendency that an excellent dispersibility is realized. The repeating unit n of oxyethylene is preferably 30 or less, more preferably 25 or less, and even more preferably 20 or less. In the case where the repeating unit n is 30 or less, there is a tendency that the hardness becomes excellent.

The amount of the poly(oxyalkylene) alkylether phosphate satisfies the peak area ratio, relative to a bis(2-ethylhexyl)phosphate, of 0.1 to 9.6, the peak area ratio being determined by LC-MS measurement of a sample prepared by mixing equal amounts of a methanol solution containing 0.03 g/mL of the polyisocyanate composition and a methanol solution containing 1000 ppm by mass of the bis(2-ethylhexyl)phosphate.

The area ratio is preferably 0.5 or more and more preferably 1.0 or more. In the case where the area ratio is 0.1 or more, the water dispersibility is excellent. The area ratio is preferably 6.0 or less, and more preferably 4.8 or less. In the case where the area ratio is the upper limit or less, the yellowing degree upon baking decreases, and the external appearance is excellent.

The area ratio is specifically determined by the method described below.

(1) 1.0 g of a sample prepared with water such that 30% by mass of the polyisocyanate composition is contained is weighed, measured up to 10 ml with a 50% aqueous methanol solution, and then mixed to obtain a methanol solution containing 0.03 g/mL of polyisocyanate composition.
(2) Equal amounts of the solution obtained in the step (1) and a methanol solution containing 1000 ppm of bis(2-ethylhexyl)phosphate are mixed to obtain a measurement sample.
(3) LC-MS (Liquid Chromatograph Mass Spectormeter) measurement is conducted in the conditions described below, and the peak area value of the poly(oxyalkylene) alkylether phosphate calculated from the mass chromatogram of the maximum ion in the mass spectrum of the poly(oxyalkylene) alkylether phosphate by the peak area value of the bis(2-ethylhexyl)phosphate calculated from the mass chromatogram (m/z 645.46 ± 0.1) of the bis(2-ethylhexyl)phosphate to obtain the peak area ratio of the poly(oxyalkylene) alkylether phosphate, relative to the bis(2-ethylhexyl)phosphate.

$$\text{Peak area raio} = \frac{\text{Peak area value of poly(oxyalkylene) alkyl phosphate}}{\text{Peak area value of bis(2-ethylhexyl)phosphate}}$$

LC apparatus: Waters, UPLC

Column: YMC, Triart C8 1.9um 12 nm (2.1 mm I.D. × 50 mm)
Column temperature: 40°C
Detection method: PDA 200 nm to 800 nm
Flow rate: 0.2 mL/min
Mobile phase: A = 10 mM ammonium acetate,
B = acetonitrile

| Gradient time (min.) | A% | b% |
|---|---|---|
| 0 | 95 | 5 |
| 10 | 0 | 100 |
| 15 | 0 | 100 |
| 15.1 | 95 | 5 |
| 20 | 95 | 5 |

Injection volume 1 μL
MS apparatus: Waters, Synapt G2
Ionization: ESI+
Scan range: m/z 100 to 1500

Although the poly(oxyalkylene) alkylether phosphate is formulated in an amount that satisfies the above-mentioned peak area ratio, the amount of the poly(oxyalkylene) alkylether phosphate to be formulated, relative to the total mass of the polyisocyanate composition, is, for example, 5 ppm by mass or more, 10 ppm by mass or more, 25 ppm by mass or more, 50 ppm by mass or more, 100 ppm by mass or more, or 145 ppm by mass or more, and 1500 ppm by mass or less, 1000 ppm by mass or less, or 650 ppm by mass or less.

[Amount of phosphorus atom]

The amount of phosphorus atom, relative to the total mass of the polyisocyanate composition according to the present embodiment, is preferably 1 ppm by mass or more, more preferably 2 ppm by mass or more, and even more preferably 5 ppm by mass or more. In the case where the amount of phosphorus atom is 1 ppm by mass or more, there is a tendency that a further excellent dispersibility is realized.
The amount of phosphorus atom is preferably 100 ppm by mass or less, more preferably 80 ppm by mass or less, even more preferably 62 ppm by mass or less, even mre preferably 50 ppm by mass or less, and even more preferably 32 ppm by mass or less. In the case where the amount is the upper limit or less, there is a tendency that the yellowing degree upon baking decreases and an excellent external appearance is realized.
The amount of phosphorus atom may be adjusted by adjusting the contents of the polyoxy(alkylene)alkyl ether phosphate and other phosphorus-containing compounds.
The amount of phosphorus atom may be measured by the method described in examples mentioned below.

[Ionic surfactant]

The polyisocyanate composition according to the present embodiment may further contain an ionic surfactant in addition to the above-mentioned components. It is preferable that the ionic surfactant used in the present embodiment is substantially free from water.
Suitable examples of an anionic surfactant include a carboxylate-type, a sulfate-type, a sulfonate-type, and a phosphate-type, such as, (C8-20 alkyl) ammonium benzene sulfonates, sodium (C8-20 alkyl) disulfate, sodium alkyldiphenyl ether disulfonate, and sodium di(C8-20 alkyl) sulfosuccinate.
Suitable examples of a cationic surfactant include quaternary ammonium salts, pyridinium salts, and imidazolinium salts, such as (C8-20 alkyl) trimethyl ammonium bromide, (C8-20 alkyl) pyridinium bromide, and imidazolinium laurate.
It is preferable that the amount of the ionic surfactant, relative to the total mass (100% by mass) of the polyisocyanate composition, be at least 0.5% by mass but less than 5% by mass, more preferably 0.5% by mass to 2% by mass, and even more preferably 0.5% by mass to 1.5% by mass. In the case where the amount of the ionic surfactant is at least 0.5% by mass, there is a tendency that the dispersibility becomes excellent. In the case where the amount is the upper limit or less, there is a tendency that the occurrence of turbidity in the polyisocyanate composition can be prevented and the external appearance become further favorable.

[Other additives]

The polyisocyanate composition according to the present embodiment may further contain various additives such as an organic solvent, a curing accelerating catalyst, an antioxidant, an ultraviolet absorber, a photostabilizer, a pigment, a leveling agent, and a plasticizer, in addition to the above-mentioned components.
Examples of the organic solvent include: solvents that tends to be miscible with water; aliphatic hydrocarbon-based solvents, such as hexane, heptane, and octane; alicyclic hydrocarbon-based solvents such as cyclohexane and methylcyclohexane; ketone-based solvents such as acetone, methylethylketone, methylisobutylketone, and cyclohexanone; ester-based solvents such as methyl acetate, ethyl acetate, butyl acetate, isobutyl acetate, methyl lactate, and ethyl lactate; aromatic solvents such as toluene, xylene, diethylbenzene, mesitylene, anisole, benzyl alcohol, phenyl glycol, and chlorobenzene; glycol-based solvents such as ethylene glycol monoethyl ether acetate, 3-methyl-3-methoxybutyl acetate, dipropylene glycol monomethyl ether, propylene glycol monomethyl ether, and propylene glycol monomethyl ether acetate; ether-based solvents such as diethyl ether, tetrahydrofuran, and dioxane; halogenated hydrocarbon-based solvent such as dichloromethane, 1,2-dichloroethane, and chloroform; pyrrolidone-based solvents such as N- methyl-2-pyrrolidon; amide-based solvents such as N,N-dimethylacetamide and N,N-dimethylformamide; sulfoxide-based solvents such as dimethyl sulfoxide; lactone-based solvents such as γ-butyrolactone; amine-based solvent such as morpholine; and mixtures thereof. These organic solvents may be used alone or in combination of at least two thereof.
Examples of the curing accelerating catalyst include: tin-based compounds such as dibutyltin dilaurate, dibutyltin diacetate, dioctyltin dilaurate, dimethyltin dineodecanoate, and bis(2-ethylhexanoate)tin; zinc compounds such as zinc 2-ethylhexanoate and zinc naphthenate; titanium compounds such as titanium 2-ethylhexanoate and titanium diisopropoxy bis(ethylacetonate); cobalt compounds such as cobalt 2-ethylhexanoate and cobalt naphthenate; bismuth compounds such as bismuth 2-ethylhexanoate and bismuth naphthenate; zirconium compounds such as zirconium tetraacetylacetonate, zirconyl 2-ethylhexanoate, and zirconyl naphthenate; and amine compounds.
Examples of the antioxidant include: hindered phenol-based compounds, phosphorus-based compounds such as phosphite esters and acidic phosphate esters, and sulfur-based compounds.
Examples of the ultraviolet absorber include: benzotriazole-based compounds, triazine-based compounds and benzophenone-based compounds.
Examples of the photostabilizer includes: hindered amine-based compounds, benzotriazole-based compounds, triazine-based compounds, benzophenone-based compounds, and benzoate-based compounds.
Examples of the pigment includes: titanium oxide, carbon black, indigo, pearl mica, and aluminum.
Examples of the leveling agent includes silicone oils.
Examples of the plasticizer includes: phthalic acid esters, phosphate-based compounds, and polyester-based compounds.

<Blocked polyisocyanate composition>

A blocked polyisocyanate composition according to the second embodiment of the present invention contains: a blocked polyisocyanate obtained by reacting a polyisocyanate with a blocking agent; and a poly(oxyalkylene) alkylether phosphate, wherein the amount of the poly(oxyalkylene) alkylether phosphate satisfies the peak area ratio, relative to a bis(2-ethylhexyl)phosphate, of 0.1 to 1.0, the peak area ratio being determined by LC-MS measurement of a sample prepared by mixing equal amounts of a methanol solution containing 0.03 g/mL of the blocked polyisocyanate composition and a methanol solution containing 1000 ppm of the bis(2-ethylhexyl)phosphate.
In the present embodiment, the same components as the first embodiment may be omitted.
As the poly(oxyalkylene) alkylether phosphate in the present embodiment, the above-mentioned poly(oxyalkylene) alkylether phosphate is available.
The amount of the poly(oxyalkylene) alkylether phosphate in the blocked polyisocyanate composition according to the present embodiment satisfies the peak ratio, relative to a bis(2-ethylhexyl)phosphate, of 0.1 to 1.0, the peak area ratio being determined by LC-MS measurement of a sample prepared by mixing equal amounts of a methanol solution containing 0.03 g/mL of the blocked polyisocyanate composition and a methanol solution containing 1000 ppm of the bis(2-ethylhexyl)phosphate.
The area ratio is preferably 0.2 or more, and more preferably 0.3 or more. In the case where the area ratio is 0.1 or less, the excellent storage stability is realized. The area ratio is preferably 0.9 or less, more preferably 0.8 or less, and even more preferably 0.7 or less. In the case where the area ratio is 1.0 or less, the excellent water resistance is realized.
As the polyisocyanate in the present embodiment, the above-mentioned polyisocyanate is available.
Among these, it is preferable that the polyisocyanate have an isocyanurate structure and an allophanate structure.

The isocyanurate structure is a structure of the following formula (3).

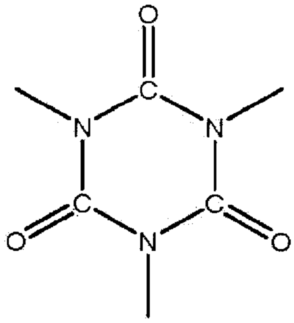

(3)

It is preferable that the polyisocyanate have the isocyanurate structure in an amount of 5% by mole to 80% by mole, relative to the total amount (100% by mole) of the isocyanurate structure, the allophanate structure, a biuret structure, a urethane group, an uretdione structure, an iminooxadiazinedione structure, and a urea structure. In the case where the amount of the isocyanurate structure is 5% by mole or more, there is a tendency that an excellent heat resistance is realized. In the case where the amount of the isocyanurate structure is 80% by mole or less, there is a tendency that an excellent water dispersibility is realized.

It is preferable that the polyisocyanate contain an isocyanurate trimer from the viewpoint of curability. The isocyanurate trimer is composed of three molecules selected from the group consisting of aliphatic diisocyanates and alicyclic diisocyanates, and has a structure having one isocyanurate structure.

It is preferable that the polyisocyanate used in the present embodiment contain an isocyanurate trimer in an amount of 10% by mass or more, and more preferably 15% by mass or more, relative to the total mass (100% by mass) thereof. In the case where the polyisocyanate contains at least the lower limit of the isocyanurate trimer, there is a tendency that an excellent curability is realized when used as a coating composition.

It is preferable that the amount of the isocyanurate trimer be 50% by mass or less, more preferably 45% by mass or less, and even more preferably 40% by mass or less. In the case where the amount of the isocyanurate trimer is 50% by mass or less, there is a tendency that an excellent storage stability is realized.

The amount of the isocyanurate trimer may be measured by the method explained in examples mentioned below.

The allophanate structure is a group formed by reaction of a hydroxy group of an alcohol and an isocyanate group, and has a structure of the following formula (4).

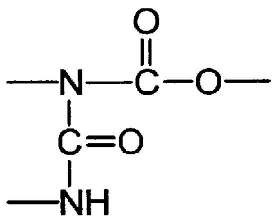

(4)

The allophanate group contained in the polyisocyanate used in the present embodiment is formed by reaction of a hydroxy group of an alcohol and an isocyanate group. Specific examples of the alcohol include monoalcohols, polyols, and mixtures of these alcohols.

Specific examples of the monoalcohols include ethanol, 1-propanol, 2-propanol, 1-butanol, 2-methyl-1-propanol, 2-butanol, 1-pentanol, 3-methyl-1-butanol, 2-methyl-1-butanol, 2,2-dimethyl-1-propanol, 2-pentanol, 3-methyl-2-butanol, 3-pentanol, 2-methyl-2-butanol, 1-hexanol, 2-methyl-1-pentanol, 3-methyl-1-pentanol, 4-methyl-1-pentanol, 2,2-dimethyl-1-butanol, 2-ethyl-1-butanol, 2-hexanol, 3-hexanol, 3-methyl-2-pentanol, 4-methyl-2-pentanol, 2-methyl-3-pentanol, 3,3-dimethyl-2-butanol, 1-heptanol, 2-heptanol, 3-heptanol, 4-heptanol, 1-octanol, 6-methyl-1-heptanol, and 2-ethylhexanol. The monoalcohols may be used alone or in combination of at least two kakthereof.

It is preferable that the monoalcohol have 4 to 10 carbon atoms, and more preferably 4 to 8 carbon atoms. In addition, it is preferable from the viewpoint of further effectively and reliably exhibitable effects in the embodiment that the monoalcohol be a primary alcohol, and more preferably has a branched structure.

It is preferable that the polyisocyanate used in the present embodiment include a monoalcohol unit in an amount

of 0.1% by mass to 10% by mass, and more preferably 0.1% by mass to 7.5% by mass, relative to the total mass (100% by mass) of the polyisocyanate. In the case where the monoalcohol unit is included in an amount of 10% by mass or less, there is a tendency that an excellent curability is realized when used as a coating composition.

Examples of the polyol include unpolymerized polyols and polymerized polyols. The unpolymerized polyols are polyols that have not been polymerized, and the polymerized polyols are polyols obtained by polymerizing monomers.

Specific examples of the unpolymerized polyols include polyhydric alcohols such as diols, triols, and tetraols. Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethylhexanediol, 1,2-octanediol, 1,2-decanediol, 2,2,4-trimethylpentanediol, 2-butyl-2-ethyl-1,3-propanediol, and 2,2-diethyl-1,3-propanediol. Examples of the triols include glycerin and trimethylolpropane. Examples of the tetraols include pentaerythritol.

Specific examples of the polymerized polyols include aliphatic hydrocarbon polyols, polyether polyols, polyester polyols, epoxy resins, fluorinated polyols, acrylic polyols, and polycarbonate polyols.

Examples of the aliphatic hydrocarbon polyols include hydroxyl-terminated polybutadiene and hydrogenated products thereof.

Examples of the polyether polyols include: polyether polyols obtained by random and/or block addition of an alkylene oxide or a mixture of at least two thereof to a polyhydric alcohol or a mixture of at least two thereof using a metal hydroxide, strong basic catalyst, composite metal cyanide complex catalyst; polyether polyols obtained by reacting an alkylene oxide with a polyamine compound such as ethylenediamines; and polymer polyols obtained by polymerizing an acrylamide using these polyether polyols as a medium.

Examples of the metal hydroxide include lithium hydroxide, sodium hydroxide, and potassium hydroxide. Examples of the strong basic catalyst include alcoholates and alkylamines. Examples of the composite metal cyanide complex catalyst include metal porphyrin and zinc hexacyanocobaltate complex. Examples of the alkylene oxide and the mixture of at least two thereof include propylene oxide, butylene oxide, cyclohexene oxide, and styrene oxide.

Examples of the polyester polyols include: resultants obtained by condensation reaction beween a dibasic acid or a mixture of at least two thereof and a ジ glycerin alcohol or a mixture of at least two thereof; and polycaprolactones obtained by ring-opening polymerization of ε-caprolactone using a polyhydric alcohol as an initiator compound. As the dibasic acid or the mixture of at least two thereof, at least one is selected from the group consisting of carboxylic acids such as succinic acid, adipic acid, sebacic acid, dimer acid, maleic anhydride, phthalic anhydride, isophthalic acid and terephthalic acid.

As the polyhydric alcohol or the mixture of at least two thereof, at least one is selected from the group consisting of ethylene glycol, propylene glycol, diethylene glycol, neopentyl glycol, trimethylolpropane and glycerin.

Additional examples of the polyhydric alcohol or the mixture of at least two thereof include nonsugars, sugar alcohol-based compounds, monosaccharides, disaccharides, trisaccharides, and tetrasaccharides. Examples of the nonsugars include diglycerin, ditrimethylolpropane, pentaerythritol, and dipentaerythritol. Examples of the sugar alcohol-based compounds include erythritol, D-threitol, L-arabinitol, ribitol, xylitol, sorbitol, mannitol, galactitol, and rhamnitol. Examples of the monosaccharides include arabinose, ribose, xylose, glucose, mannose, galactose, fructose, sorbose, rhamnose, fucose, and ribodesose. Examples of the disaccharides include trehalose, sucrose, maltose, cellobiose, gentiobiose, lactose, and melibiose. Examples of the trisaccharides include raffinose, gentianose, and melicitose. Examples of the tetrasaccharides include stachyose.

Examples of the epoxy resins include glycidyl ether-based epoxy resins (such as bisphenol A type, bisphenol F ype, bisphenol AD type, phenol novolac type, and cresol novolac type), cyclic aliphatic epoxy resins (such as alicyclic type diepoxy acetal, alicyclic type epoxy adipate), glycidyl ester-based resins (such as phthalic acid diglycidyl ester, tetrahydrophthalic acid diglycidyl ester, hexahydrophthalic acid diglycidyl ester, diglycidyl-p-oxybenzoate, dimer acid glycidyl ester), glycidyl amine-based resins (such as N,N-diglycidylaniline, tetraglycidyl diamino diphenylmethane, triglycidyl-p-aminophenol), heterocyclic epoxy resin (such as hydantoin-type epoxy resins such as diglycidyl hydantoin, and glycidyl glycidoxy alkyl hydantoin, and triglycidyl isocyanurate), resins obtained by modifying these epoxy resins with an amino compound, a polyamide compound.

Examples of the acrylic polyols inludes acrylic polyols resin obtained by polymerizing at least one selected from the group consisting of acrylic esters having an active hydrogen, such as 2-hydroxyethyl acrylate, 2-hydroxypropy acrylate, and 2-hydroxybutyl acrylate, an acrylic monoester or methacrylic monoester of glycerin, and an acrylic monoester or methacrylic monoester of trimethylolpropane, and at least one selected from the group consisting of acrylic esters such as methyl acrylate, ethyl acrylate, isopropyl acrylate, n-butyl acrylate, and 2-ethylhexyl acrylate, methacrylic esters having an active hydrogen, such as 2-hydroxyethyl methacrylate, 2-hydroxypropyl methacrylate, 2-hydroxybutyl methacrylate, 3-hydroxypropyl methacrylate, and 4-hydroxybutyl methacrylate, and methacrylic esters such as methyl methacrylate, ethyl methacrylate, isopropyl methacrylate, n-butyl methacrylate, isobutyl methacrylate, n-hexyl methacrylate, and lauryl methacrylate, in the presence or absence of at least one selected from the group consisting of an unsaturated carboxylic acid such as acrylic acid, methacrylic acid, maleic acid, or itaconic acid, an unsaturated amide such as acrylamide, N-methylol acrylamide, or diacetone acrylamide, and a polymerizable monomer such as glycidyl methacrylate, styrene, vinyl toluene, vinyl acetate, acrylonitrile, or dibutyl fumarate.

The fluorinated polyols are polyols containing fluorine in the molecule thereof, and examples thereof include copolymers of fluoroolefins, cyclic vinyl ethers, hydroxyalkylvinyl ethers, vinyl monocarboxylates.

Examples of the polycarbonate polyols include polymers obtained by polymerizing carbonates such as alkylene carbonates such as ethylene carbonate or dialkyl carbonates such as diethyl carbonate.

Among these polyols, polyhydric alcohols, which are unpolymerized polyols, and polyether polyols and polyester polyols, which are polymerized polyols, are preferable, and polyester polyols are more preferable. As the polyester polyols, polycaprolactones are preferable. These polyols may be used alone or in combination of at least two thereof.

It is preferable that the mole ratio of allophanate groups relative to isocyanurate groups (allophanate groups/isocyanurate groups) of the blocked polyisocyanate in the blocked polyisocyanate composition according to the present embodiment be 10/90 to 90/10, more preferably 20/80 to 80/20, even more preferably 30/70 to 70/30, and further more preferably 40/60 to 60/40.

In the case where the mole ratio is 90/10 or less, there is a tendency that an excellent water dispersibility is realized. In the case where the mole ratio is 10/90 or more, there is a tendency that an excellent heat resistance is realized when used as a coating composition.

The mole ratio may be measured by the method explained in examples mentioned below.

It is preferable that the average number of functional groups of the polyisocyanate be 2.6 to 9.5.

In the case where the average number of functional groups is 9.5 or less, there is a tendency that an excellent viscosity is realzied. In the case where the average number of functional groups is 2.6 or more, there is a tendency that an excellent curability is realized when used as a coating composition.

It is preferable that the blocked polyisocyanate composition in the present embodiment be obtained by reaction among the polyisocyanate, a hydrophilic compound, and a blocking agent.

As the hydrophilic compound, the above-mentioned hydrophilic compound is available.

[Blocking agent]

At leas a part of isocyanate groups in the blocked polyisocyanate composition according to the present embodiment is blocked with a blocking agent. The blocking agent is a compound having one active hydrogen in a molecule thereof, and specific examples thereof include alcohol-based compounds, alkylphenol-based compounds, phenol-based compounds, active methylene-based compounds, mercaptan-based compounds, acid amide-based compounds, acid imide-based compound, imidazole-based compounds, urea-based compounds, oxime-based compounds, amine-based compounds, imide-based compounds, and pyrazole-based compounds.

Specific examples of the blocking agent include the following blocking agents.

(1) Alcohol-based compounds: methanol, ethanol, 2-propanol, n-butanol, sec-butanol, 2-ethyl-1-hexanol, 2-methoxyethanol, 2-ethoxyethanol, 2-butoxyethanol.
(2) Alkylphenol-based compounds: mono- or di-alkylphenols having an alkyl group having at least 4 carbon atoms as a substituent, such as monoalkylphenols such as n-propylphenol, i-propylphenol, n-butylphenol, sec-butylphenol, t-butylphenol, n-hexylphenol, 2-ethylhexylphenol, n-octylphenol, and n-nonylphenol; and dialkylphenols such as di-n-propylphenol, diisopropylphenol, isopropylcresol, di-n-butylphenol, di-t-butylphenol, di-sec-butylphenol, di-n-octylphenol, di-2-ethylhexylphenol, and di-n-nonylphenol.
(3) Phenol-based compounds: phenol, cresol, ethylphenol, styrenated phenol, and hydroxybenzoate.
(4) Active methylene-based compounds: dimethyl malonate, diethyl malonate, methyl acetoacetate, ethyl acetoacetate, and acetylacetone.
(5) Mercaptan-based compounds: butyl mercaptan, and dodecyl mercaptan.
(6) Acid amide-based compounds: acetanilide, acetamide, $\varepsilon$-caprolactam, $\delta$-valerolactam, and $\gamma$-butyrolactam.
(7) Acid imide-based compounds: succinimide and maleinimide
(8) Imidazole-based compounds: imidazole and 2-methylimidazole.
(9) Urea-based compounds: urea, thiourea and ethylene urea.
(10) Oxime-based compounds: formaldoxime, acetaldoxime, acetoxime, methylethylketoxime, and cyclohexanone oxime.
(11) Amine-based compounds: diphenylamine, aniline, carbazole, di-n-propylamine, diisopropylamine, and isopropylethylamine.
(12) Imine-based compounds: ethylene imine and polyethylene imine.
(13) Pyrazole-based compounds: pyrazole, 3-methylpyrazole, and 3,5-dimethylpyrazole.

These blocking agent may be used alone or in combination of at least two thereof.

The blocking agent preferably contains at least one selected from the group consisting of oxime-based compounds, pyrazole-based compounds, active methylene-based compounds, amine-based compounds, and acid amide-based compounds, and more preferably contains an oxime-based compound or a pyrazole-based compound from the viewpoint of storage stability.

[Amount of phosphorus atom]

It is preferable that the amount of phosphorus atom, relative to the total mass of the blocked polyisocyanate composition according to the present embodiment, be at least 1 ppm by mass, more preferably at least 2 ppm by mass, and even more preferably at least 5 ppm by mass. In the case where the amount of phosphorus atom is at least 1 ppm by mass, there is a tendency that a further excellent dispersibility is realzied.

It is preferable that the amount of phosphorus atom be 100 ppm by mass or less, more preferably 80 ppm by mass or less, even more preferably 62 ppm by mass or less, even more preferably 50 ppm or less, and even more preferably 32 ppm or less. In the case where the amount is the above-mentioned upper limit or less, there is a tendency that the yellowing upon baking decreases and an external appearance is realized.

[Ionic surfactant]

The blocked polyisocyanate composition according to the present embodiment may contain additional ionic surfactants other than the above-metnioned components. In addition, it is preferable that the ionic surfactant in the present embodiment is substantially free from water.

Examples of an anionic surfactant and a cationic surfactant include those similar to the first embodiment.

It is preferable that the amount of the ionic surfactant, relative to the total mass (100% by mass) of the blocked polyisocyanate composition, be 0.5% by mass or more but less than 5% by mass, more preferably 0.5% by mass or more but 2% by mass or less, and even more preferably 0.5% by mass or more but 1.5% by mass or less. In the case where the amount of the ionic surfactant is 0.5% by mass or more, there is a tendency that a further excellent dispersibility is realized. In the case where the amount is the above-mentioned upper limit or less, there is a tendency that the occurrence of the turbidity in the polyisocyanate composition is prevented, and a further excellent external appearance is realized.

[Additional additives]

The blocked polyisocyanate composition according to the present embodiment may contain, in addition to the above-mentioned components, various additives such as organic solvents, curing accelerating catalysts, antioxidants, ultraviolet absorbers, photostabilizers, pigments, leveling agents, and plasticizers. As the various additives such as the organic solvents, curing accelerating catalysts, antioxidants, ultraviolet absorbers, photostabilizers, pigments, leveling agents, and plasticizer, the same ones as in the first embodiment are available.

[Aqueous dispersion]

An aqueous dispersion may contain the blocked isocyanate composition according to the second embodiment and water. The aqueous dispersion may be obtained by adding water to the blocked isocyanate composition according to the second embodiment, for example. It is preferable that a predetermined amount of water be added to the blocked isocyanate composition in a divided or dropwise manner. In the case where water is added in the divided manner, it is preferable that the addition amount be divided by four to eight.

It is preferable that the liquid temperature of the aqueous dispersion be maintained at 50°C or more but less than 80°C when the amount of the blocked polyisocyanate, relative to the amount of water (100% by mass), is 55% by mass or more, the liquid temperature be maintained at 45°C or more but less than 50°C when the amount is 45% by mass or more but less than 55% by mass, and the liquid temperature be maintained at 20°C or more but less than 50°C when the amount is less than 45% by mass. In the case where the predetermined amount of water be added in the divided or dropwise manner while mainting the liquid temperature between the above-mentioned range, there is a tendency that it is possible to suppress an excessive growth of the average particle diameter (average dispersed particle diameter) of the aqueous dispersion and the deterioration of the stability, such as the occurrence of precipitation and separation, of the aqueous dispersion.

It is preferable that the aqueous dispersion contain 10% by mass to 40% by mass of the blocked polyisocyanate, relative to the total mass (100% by mass) of the aqueous dispersion.

<Preparation method of polyisocyanate>

Specific examples of the preparation method of the above-metnioned polyisocyanate include a method in which the isocyanuration reaction in which an isocyanurate group is formed from isocyanate groups of at least one diisocyanate selected from the group consisting of the above-mentioned aliphatic diisocyanates and alicyclic diisocyanates (hereinafter, also referred to as "diisocyanate"), the allophanation reaction in which an allophanate group is formed from an isocyanate group and a hydroxy group of an alcohol, and/or, the uretdionation reaction in which a uretdione group is formed, are conducted in the presence of an excessive amount of the diisocyanate, and the unreacted diisocyanate is removed after the end of the reaction.

The polyisocyanate having an isocyanurate group may be prepared by a conventionally-known method, and specifically may be prepared by multimelization of aliphatic diisocyanates and/or alicyclic diisocyanates with an isocyanuration catalyst.

It is preferable that the isocyanuration catalyst have a basic property, and specific examples thereof include: organic weak acid salts of tetraalkyl ammonium, obtained from tetraalkyl ammonium such as tetramethyl ammonium, monoethyltrimethyl ammonium, diethyldimethyl ammonium, tetraethyl ammonium, or tetrabutyl ammonium, with hydoxide, acetic acid, or capric acid; weak acid salts of hydroxyalkyl ammonium, obtained from hydroxyalkyl ammonium such as trimethylhydroxypropyl ammonium, trimethylhydroxyethyl ammonium, triethylhydroxypropyl ammonium, or triethylhydroxyethyl ammonium, with hydoxide, acetic acid, or capric acid; metal salts of alkylcarboxylic acid, obtained from alkylcarboxylic acid such as acetic acid, caproic acid, octyl acid, or myristic acid, with tin, zinc, lead, sodium, or potassium; metal alcoholate such as sodium alcoholate or potassium alcoholate; aminosilyl-containing compounds such as hexamethyldisilazane; Mannich bases; and combinations of tertiary amines with epoxy compounds. Among these, weak acid salts of tetraalkyl ammonium, weak acid salts of hydroxyalkyl ammonium, and metal salts of alkylcarboxylic acid are preferable, and weak acid salts of tetraalkyl ammonium is more preferable, from the viewpoint of catalytic efficiency.

It is preferable that the addition amount of the isocyanuration catalyst, relative to the total amount of the charged diisocyanates, be 10 ppm to 1000 ppm, more preferably 10 ppm to 500 ppm, and even more preferably 10 ppm to 100 ppm. In the case where the addition amount is 1000 ppm or less, there is a tendency that the convenience in the preparation process is realized. In the case where the addition amount is 10 ppm or more, there is a tendency that an excellent reaction efficiency is realized.

It is preferable that the reaction temperature in the isocyanuration reaction be 50°C to 120°C, and more preferably 60°C to 90°C. In the case where the reaction temperature falls within the above-mentioned range, there is a tendency that the resultant product is hardly colored.

It is preferable that the isocyanuration reaction be stopped by addition of a reaction terminator, as needed, when the conversion ratio (the mass ratio of the polyisocyanate formed by the isocyanuration reaction, relative to the charged diisocyanates) has reached the predetermined value. The conversion ratio of the isocyanuration reaction is preferably 25% or less, and more preferably 20% or less, from the viewpoint of realizaition of the low viscosity and the curability when used as a coating composition. In addition, it is preferable that the progress of the reaction be stopped at the initial stage so as to obtain a polyisocyanate having an isocyanurate group in a further efficient manner. In particular, it is preferable that reaction conditions be appropriately selected, since the initial reaction rate of the cyclic trimerization of isocyanate groups is very rapid preferably, among the reaction conditions, the addition amount and the addition method of a catalyst be appropriately selected. As the addition method of the catalyst, a method of adding the catalyst in a divided manner at every constant time is preferable.

Examples of the reaction terminator include: acidic phosphoric acid compounds such as phosphoric acid, pyrophosphoric acid, metaphosphoric acid, and polyphosphoric acid; monoalkyl or dialkyl esters of phosphoric acid, pyrophosphoric acid, metaphosphoric acid, or polyphosphoric acid; halogenated acetic acids such as monochloroacetic acid; benzoyl chloride, sulfonic acid esters, and sulfuric acid. There is a tendency that the storage stability of the resultant polyisocyanate is further improved by using the reaction terminator.

The polyisocyanate having an allophanate group may be prepared by a conventionally-known method, and specifically may be prepared by mixing an aliphatic diisocyanate and/or an alicyclic diisocyanate with an alcohol, and then conducting allophanation using an allophanation catalyst. The same reaction terminator may be used in the same way as the above-mentioned preparation method of the polyisocyanate having an isocyanurate group.

Examples of the allophanation catalyst include salts of alkylcarboxylic acid with tin, lead, zinc, bismuth, zirconium, zirconyl. Specific examples thereof include: organic tin compounds such as tin 2-ethylhexanoate and dibutyltin dilaurate; organic lead compounds such as lead 2-ethylhexanoate; organic zinc compounds such as zinc 2-ethylhexanoate; bismuth 2-ethylhexanoate, zirconium 2-ethylhexanoate, and zirconyl 2-ethylhexanoate. The allophanation catalyst may be used alone or in combination of at least two thereof.

The ratio of the functional isocyanate group number of the aliphatic diisocyanate and/or the alicyclic diisocyanate, relative to the functional hydroxyl group number of the alcohol, is preferably 10/1 to 1000/1, and more preferably 100/1 to 1000/1. In the case where the ratio is 10/1 or more, there is a tendency that the average number of the functional

isocyanate groups in the polyisocyanate increases. In the case where the ratio is 1000/1 or less, there is a tendency that the viscosity decreases.

The isocyanuration catalyst may be used as an allophanation catalyst.

In the case where the allophanation reaction is conducted by using the isocyanuration catalyst, isocyanurate groups are formed. Thus, there is a tendency that the use of the above-mentioned isocyanuration catalyst as an allophanation catalyst makes it possible to conduct both the allophanation reaction and the isocyanuration reaction, which is excellent in terms of economic production.

The polyisocyanate having an uretdione group may be prepared by a conventionally-known method, such as multimelization of the aliphatic diisocyanate and/or the alicyclic diisocyanate by using an uretdionation catalyst or applying heat thereto.

Although the uretdionation catalyst is not particularly limited, examples thereof include: tertiary phosphines such as trialkylphosphines such as tri-n-butylphosphine and tri-n-octylphosphine; tris(dialkylamino)phosphines such as tris-(dimethylamino)phosphine and tris-(diethylamino)phosphine; cycloalkylphosphines such as cyclohexyl-di-n-hexylphosphines; and Lewis acids such as boron trifluoride and acidic zinc chloride.

Many of the uretdionation catalyst can facilitate the progress of the isocyanuration reaction simultaneously.

In the case where the uretdionation catalyst is used, it is preferable that the uretdionation reaction be stopped using a deactivator against the uretdionation catalyst, such as phosphoric acid or methyl paratoluenesulfonate, when the yield reaches the predetermined level.

In the case where the polyisocyanate having an uretdione is obtained by heating the aliphatic diisocyanate and/or the alicyclic diisocyanate without using any uretdionation catalysts, the heating temperature is preferably 120°C or more, and more preferably 150°C to 170°C. In addition, the heating time is preferably 1 to 4 hours.

The polyisocyanate having a urethane group may be prepared by a conventionally-known method, such as a method in which the aliphatic diisocyanate and/or the alicyclic diisocyanate is mixed wih an alcohol, and an urethanation catalyst is added thereto, as needed, followed by heating the mixture at 40 to 180°C. As the alcohol, the same ones as mentioned above may be used.

Although the urethanation catalyst is not particularly limited, examples thereof include tin-based compounds, zinc -based compounds, and amine-based compounds.

The polyisocyanate having a biuret group may be prepared by a conventionally-known method, such as a method in which the aliphatic diisocyanate and/or the alicyclic diisocyanate is mixed with water or a tertiary alcohol, and then the mixture is heated preferably at 100°C to 200°C, and more preferably at 140°C to 180°C.

The above-mentioned isocyanuration reaction, allophanation reaction, and uretdionation reaction may be conducted sequentially, or some of the reactions may be conducted simultaneously. It is preferable that the isocyanuration reaction and the allophanation reaction be conducted simultaneously, followed by conducting the uretdionation reaction. It is more preferable that the isocyanuration reaction and the allophanation reaction be conducted simultaneously using a common catalyst, followed by conducting the uretdionation reaction by applying heat to the resultant. Thus, it is possible to simplify the preparation process.

Unreacted diisocyanates are removed from each reaction liquids obtained after the end of the reactions by conducting thin film distillation, extraction, to obtain a polyisocyanate composition. It is preferable that the unreacted diisocyanates be removed from the viewpoint of safety.

<Preparation method of modified polyisocyanate>

The above-mentioned modified polyisocyanate may be obtained by reacting the polyisocyanate and a hydrophilic compound.

An organic salt of metal such as tin, zinc, or lead, a tertiary amine-based compound, or an alcoholate of alkali metal such as sodium may be used in the reaction process as a catalyst.

The reaction temperature in the reaction process is preferably -20°C to 150°C, and more preferably 30°C to 100°C. In the case where the reaction temperature is -20°C or more, there is a tendency that the reactivity increases. In the case where the reaction temperature is 150°C or less, there is a tendency that side-reaction is suppressed.

It is preferable that the hydrophilic compound be complelty reacted with the polyisocyanate such that no unreacted hydrophilic compound remains. The absence of the unreacted hydrophilic compound in the polyisocyanate composition tends to suppress the deterioration of the water-dispersion stability of the polyisocyanate composition and the curability when used as a coating composition.

<Preparation method of blocked polyisocyanate>

Although the preparation method of the blocked polyisocyanate is not particularly limited, the blocked polyisocyanate may be obtained by reacting the polyisocyanate with a blocking agent, for example.

The blocked polyisocyanate is prepared, for example, by reacting the polyisocyanate, the hydrophilic compound, and the blocking agent, so as to increase the compatibility in the aqueous coating material.

The reaction of an isocyanate group of the polyisocyanate and the hydrophilic compound, and the reaction of the isocyanate group and the blocking agent may be conducted simultaneously, whilst one of the reactions may be conducted in advance, and then the other reaction may be conducted. Among them, it is preferable that the reaction of the isocyanate group and the hydrophilic compound be conducted in advance, and then, after the end of the reaction, the reaction of the resultant with the blocking agent be conducted.

The reaction conditions such as the reaction temperature, catalysts, may be the same as those in the preparation method of the modified polyisocyanate. In the case where isocyanate groups remain after the end of the reaction, it is preferable that the blocking agent be added to conduct reaction until isocyanate groups are completely disappeared.

<Preparation method of polyisocyanate composition>

The polyisocyanate composition according to the first embodiment may be obtained by mixing the polyisocyanate with the poly(oxyalkylene) alkylether phosphate, and, as needed, an ionic surfactant.

In the case where the modified polyisocyanate is used, it is preferable, from the viewpoint of the preparation stability, that the poly(oxyalkylene) alkylether phosphate, and, as needed, the ionic surfactant be added before the preparation of the modified polyisocyante is started, that is, the polyisocyanate be modified after adding the poly(oxyalkylene) alkylether phosphate, and, as needed, the ionic surfactant.

In the case where the poly(oxyalkylene) monoalkyl ether is used as the hydrophilic compound, the polyisocyanate, the poly(oxyalkylene) monoalkyl ether and an acidic phosphate esters are added together to be reacted to form the modified polyisocyanate according to the present embodiment with a poly(oxyalkylene) alkylether phosphate simultaneously, and thus the polyisocyanate composition according to the present embodiment is obtained.

<Preparation method of blocked polyisocyanate composition>

It is preferable, from the viewpoint of preparation stability, that the blocked polyisocyanate composition according to the second embodiment be obtained by reacting a polyisocyanate with a blocking agent in the presence of a poly(oxyalkylene) alkylether phosphate and, as needed, an ionic surfactant.

In the case where the hydrophilic compound and the blocking agent are used, it is preferable, from the viewpoint of preparation stability, that an isocyanate group of the polyisocyanate and a hydrophilic compound be reacted in the presence of the poly(oxyalkylene) alkylether phosphate, and, as needed, an ionic surfactant. It is preferable that the polyisocyanate composition and the hydrophilic compound are reacted completely so that unreacted hydrophilic compounds are not remained. There is a tendency that the deterioration of the water-dispersion stability of the blocked polyisocyanate composition and the curability when used as a coating composition are suppressed in the absence of unreacted hydrophilic compounds.

<Coating composition>

A coating composition may contain: either the polyisocyanate composition or the blocked polyisocyanate composition; and a main agent. The aqueous coating composition contains the coating composition and water. The coating composition is not particularly limited, provided that the coating composition contains: either the polyisocyanate composition or the blocked polyisocyanate composition; and the main agent, and may be made into an organic solvent-based coating composition further containing an organic solvent, in addition to the aqueous coating composition further containing water. The aqueous coating composition in which resins that are components which form coating film are dissolved or dispersed in a medium containing water as the main component thereof is preferable in comparison with a coating composition containing an an organic solvent without containing water, from the view point of decrease in the amount of an organic solvent to be used.

The coating composition and aqueous coating composition may be used, for example, as a architectural coating material, automotive coating material, automotive refinishing coating material, coating material to be applied on plastics, tackifier, adhesive, building material, household aqueous coating material, other coating material, sealing agent, ink, casting material, elastomer, foam, plastic raw material, or fiber treatment agent.

Although the resins used as the main agent of the coating composition or the aqueous coating composition are not limited to the followings, examples thereof include acrylic resins, polyester resins, polyether resins, epoxy resins, fluorine resins, polyurethane resins, polyvinylidene chloride copolymers, polyvinyl chloride copolymers, vinyl acetate copolymers, acrylonitrile-butadiene copolymers, polybutadiene copolymers, and styrene-butadiene copolymers.

Although the acrylic resins are not limited to the followings, examples thereof include: (meth)acrylic esters, such as methyl (meth)acrylate, ethyl (meth)acrylate, isopropyl (meth)acrylate, n-butyl (meth)acrylate, 2-ethylhexyl

(meth)acrylate, and lauryl (meth)acrylate; (meth)acrylic esters having an active hydrogen, such as 2-hydroxyethyl (meth)acrylate, 2-hydroxypropy (meth)acrylate, 2-hydroxybutyl (meth)acrylate, 3-hydroxypropyl (meth)acrylate, and 4-hydroxybutyl (meth)acrylate; unsaturated carboxylic acids, such as acrylic acid, methacrylic acid, maleic acid, and itaconic acid; unsaturated amides such as acrylamide, N-methylol acrylamide, and diacetone acrylamide; and acrylic resins obtained by polymerizing one or a mixture of other polymerizable monomers, such as glycidyl methacrylate, styrene, vinyl toluene, vinyl acetate, acrylonitrile, dibutyl fumarate, p-styrenesulfonic acid, and allyl sulfosuccinic acid. Although an emulsion polymerization method is generally adopted as a polymerization method thereof, a suspension polymerization method, a dispersion polymerization method, or a solution polymerization method may be adopted. In the emulsion polymerization, polymerization may be conducted in a stepwise manner.

Although the polyester resins are not limited to the followings, examples thereof include: polyester resins obtained by condensation reaction of one or a mixture of carboxylic acids, such as succinic acid, adipic acid, sebacic acid, dimer acid, maleic anhydride, phthalic anhydride, isophthalic acid, terephthalic acid, trimellitic acid, and pyromellitic acid, with one or a mixture of polyhydric alcohols selected from the group consisting of: diols, such as ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, and 2,2-diethyl-1,3-propanediol; triols, such as glycerin and trimethylolpropane; and tetraols, such as diglycerin, dimethylolpropane and pentaerythritol; and polycaprolactones obtained by ring-opening polymerization of ε-caprolactone with a hydroxyl group of a polyol having a low molecular weight.

Although the polyether resins are not limited to the followings, examples thereof include: polyether polyols obtained by adding one or a mixture of alkylene oxides, such as ethylene oxide, propylene oxide, butylene oxide, cyclohexene oxide, and styrene oxide, to one or a mixture of polyvalent hydroxyl compounds using a hydroxide of lithium, sodium, potassium, or a strong basic catalyst such an alcoholate or an alkylamine; polyether polyols obtained by reacting an alkylene oxide with a polyfunctional compound such as ethylenediamine; polyether polyols obtained by ring-opening polymerization of cyclic ethers such as tetrahydrofuran; and polymer polyols obtained by polymerization of acrylamides using these polyethers as a medium.

Among these resins, acrylic resins or polyester resins are preferable. In addition, a melamine-based curing agent, or a resin such as urethane dispersion or urethane acrylic emulsion may be used together, as needed.

It is preferable that these resins be emulsified, dispersed or dissolved in water. Accordingly, carboxyl groups, sulfone groups, contained in the resins, can be neutralized.

Although a neutralizing agent available to neutralize the carboxyl groups, the sulfone groups, is not particularly limited, at least one selected from the groups consisting of ammonia and aqueous amino compounds such as monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine, may be used as the neutralizing agent. As the neutralizing agent, the triethylamine and dimethylethanolamine, that are tertiary amines, are preferable.

It is preferable that the main agent available in the coating composition or the aqueous coating composition containing the blocked polyisocyanate be at least one selected from the group consisting of polyols, polyamines, and alkanolamines.

It is preferable that the coating composition or the aqueous coating composition contain at least a polyol. Examples of the polyol include polyester polyols, acrylic polyols, polyether polyols, polyolefin polyols, fluorinated polyol, polycarbonate polyols, and polyurethane polyols.

Specific examples of the polyester polyols include: polyester polyols obtained by condensation reaction of at least one dibasic acid selected from the group consisting of succinic acid, adipic acid, sebacic acid, dimer acid, maleic anhydride, phthalic anhydride, isophthalic acid, and terephthalic acid, with at least polyhydric alcohol selected from the group consisting of ethylene glycol, propylene glycol, diethylene glycol, neopentyl glycol, trimethylolpropane, and glycerin; and polycaprolactones obtained by ring-opening polymerization of ε-caprolactone using a polyhydric alcohol.

Example of the acrylic polyols include copolymers of ethylenically unsaturated monomers having a hydroxyl group with other ethylenically unsaturated monomers copolymerizable therewith. Examples of the ethylenically unsaturated monomers having a hydroxyl group include hydroxyethyl acrylate, hydroxypropyl acrylate, hydroxybutyl acrylate, hydroxyethyl methacrylte, hydroxypropyl methacrylte, and hydroxybutyl methacrylte. Among these, hydroxyethyl acrylate and hydroxyethyl methacrylte are preferable.

Examples of the other ethylenically unsaturated monomers copolymerizable wih the ethylenically unsaturated monomer having a hydroxyl group include: acrylic esters such as methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate; methacrylic esters such as methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate; unsaturated carboxylic acids such as acrylic acid, methacrylic acid, maleic acid, and itaconic acid; unsaturated amides such as acrylamide, methacrylamide, N,N-methylene bisacrylamide, diacetone acrylamide, diacetone methacrylamide, maleic acid amide, and maleimide; vinyl -based monomers such as glycidyl methacrylate, styrene, vinyl toluene, vinyl acetate, acrylonitrile, and dibutyl fumarate; vinyl -based monomers having a hydrolyzable silyl group, such as vinyltrimethoxysilane, vinylmethyldimethoxysilane, and γ-(meth)acryloxypropyltrimethoxysilane.

Examples of the polyether polyols include: polyether polyols obtained by adding an alkylene oxide such as ethylene oxide, propylene oxide, butylene oxide, cyclohexene oxide or styrene oxide to a polyvalent hydroxyl compound using a hydroxide of lithium, sodium, potassium, or a strong basic catalyst such as an alcoholate or an alkylamine; polyether polyols obtained by reacting a polyfunctional compound such as an ethylenediamine with an alkylene oxide; and polymer polyols obtained by polymerizing acrylamides using these polyether polyols as a medium.

Examples of the polyvalent hydroxyl compound include: diglycerin, ditrimethylolpropane, pentaerythritol, dipentaerythritol; sugar alcohol-based compounds such as erythritol, D-threitol, L-arabinitol, ribitol, xylitol, sorbitol, mannitol, galactitol, and rhamnitol; monosaccharides such as arabinose, ribose, xylose, glucose, mannose, galactose, fructose, sorbose, rhamnose, fucose, and ribodesose; disaccharides such as trehalose, sucrose, maltose, cellobiose, gentiobiose, lactose, and melibiose; trisaccharides such as raffinose, gentianose, and melicitose; and tetrasaccharides such as stachyose.

Examples of the polyolefin polyols include polybutadienes having at least two hydroxy groups, hydrogenated polybutadienes, polyisoprene, and hydrogenated polyisoprene. It is preferable that the number of hydroxy group contained in statistical one molecule of the polyol (hereinafter, referred to as "hydroxy group average number") be at least two. In the case where the hydroxy group average number of the polyol is at least two, there is a tendency that the reduction of the crosslinking density in the resulting coating film is suppressed.

The fluorinated polyol is a polyol containing a fluorine in a molecule thereof, and examples thereof include copolymers of fluoroolefins, cyclic vinyl ethers, hydroxyalkylvinyl ethers, vinyl monocarboxylate, which are disclosed, for example, in Japanese Unexamined Patent Application, Publication No. S57-34107 or Japanese Unexamined Patent Application, Publication No.S61-275311.

Examples of the polycarbonate polyols include condensation polymerization product obtained by condensation polymerization of low-molecular carbonate compounds such as dialkyl carbonates such as dimethyl carbonate, alkylene carbonates such as ethylene carbonates, or diarylcarbonates such as diphenyl carbonates with a polyhydric alcohol availabled in the polyester polyols.

The polyurethane polyols may be obtained by reacting a polyol with a polyisocyanate by a conventionally-known method. Examples of the polyol free from carboxyl groups include: polyols having a low-molecular weight, such as ethylene glycol and propylene glycol; and polyols having a high-molecular weight, such as acrylic polyol, polyester polyol, and polyether polyol.

Among the polyols, acrylic polyol and polyester polyol are preferable.

In the case where the polyol is used, the ratio of the functional blocked isocyanate group number, relatve to the hydroxy group number of the polyol, in the coating composition or the aqueous coating composition, is preferably 1/10 to 10/1.

It is preferable that the hydroxyl value per polyol resin be 10 mgKOH/g-resin to 300 mgKOH/g-resin. In the case where the hydroxyl value per resin is 10 mgKOH/g-resin or more, there is a tendency that the decrease in the crosslinking density is suppressed, and physical properties objective are sufficiently achieved. On the other hand, in the case where the hydroxyl value per resin is 300 mgKOH/g-resin or less, there is a tendency that the excessive increase in the crosslinking density is suppressed, and the mechanical physical properties of a coating film is highly mainained.

It is preferable that the acid value per polyol resin be 5 mgKOH/g-resin to 150 mgKOH/g-resin, more preferably 8 mgKOH/g-resin to 120 mgKOH/g-resin, and even more preferably 10 mgKOH/g-resin to 100 mgKOH/g-resin. In the case where the acid value is 5 mgKOH/g-resin or more, there is a tendency that the water dispersibility is maintained at a high level. In the case where the acid value is 150 mgKOH/g-resin or less, there is a tendency that the decrease in the water resistance of a coating film is prevented.

In the case where either a polyisocyanate composition or a blocked polyisocyanate composition is used with a polyol in an aqueous coating composition, either the polyisocyanate composition or the blocked polyisocyanate composition may be blended with the polyol by mixing either the polyisocyanate composition or the blocked polyisocyanate composition with the polyol directly to be dispersed, alternatively or by belnding either the polyisocyanate composition or the blocked polyisocyanate composition with water, and, as needed, a solvent, followed by mixing the resultant with the polyol.

Examples of the polyamine include polyamines having at least two selected from the group consisting of primary amino groups and secondary amino groups in a molecule thereof, and polyamines having at least three in a molecule thereof are preferable.

Specific examples of the polyamine include: diamines, such as ethylenediamine, propylenediamine, butylenediamine, triethylenediamine, hexamethylenediamine, 4,4'-diaminodicyclohexylmethane, piperazine, 2-methylpiperazine, and isophoronediamine; linear polyamines having at least three amino groups, such as bishexamethylenetriamine, diethylenetriamine, triethyl enetetramine, tetraethylenepentamine, pentamethylenehexamine, and tetrapropylenepentamine; and cyclic polyamines such as 1,4,7,10,13,16-hexaazacyclooctadecane, 1,4,7,10-tetraazacyclodecane, 1,4,8,12-tetraazacyclopentadecane, and 1,4,8,11-tetraazacyclotetradecane.

The alkanolamine is a compound having both an amino group and a hydroxyl group in a molecule thereof. Specific examples thereof include monoethanolamine, diethanolamine, aminoethylethanolamine, N-(2-hydroxypropyl)ethylenediamine, mono-, di-(n- or iso-)propanolamine, ethylene glycol bispropylamine, neopentanolamine, and methylethanolamine.

The polyisocyanate composition or the blocked polyisocyanate composition may contain a solvent exhibiting the tendency of the miscibility against water depending on the purpose of improving the compatibility in the aqueous coating composition.

Examples of the solvent exhibiting the tendency of the miscibility against water include diethylene glycol dimethyl ether, diethylene glycol diethyl ether, propylene glycol monomethyl ether acetate, propylene glycol monomethyl ether, propylene glycol dimethyl ether, dipropylene glycol dimethyl ether, isobutanol, butylglycol, N-methylpyrrolidone, butyldiglycol, and butyl diglycol acetate. Among these solvents, diethylene glycol dimethyl ether, diethylene glycol diethyl ether, propylene glycol monomethyl ether, propylene glycol dimethyl ether, dipropylene glycol dimethyl ether, isobutanol, butyl glycol, N-methylpyrrolidone, and butyl diglycol are preferable, and diethylene glycol dimethyl ether, diethylene glycol diethyl ether, propylene glycol dimethyl ether, and dipropylene glycol dimethyl ether are more preferable. These solvent may be used alone or in combination of at least two thereof.

A conventionaly-known melamine resin, epoxy resin, or polyurethane resin may be formulated in the coating composition or the aqueous coating composition. In addition, in the case where the above-mentioned polyol has a carboxyl group, an oxazoline group-containing compound or a carbodiimide group-containing compound may be formulated. In addition, in the case where the above-mentioned polyols has a carbonyl group, a hydrazide group-containing compound or a semicarbazide group-containing compound may be contained. These compounds may be formulated alone or in combination of at least two compounds.

Examples of the melamine resin include partially or completely methylolated melamine resins obtained by reaction of melamine and aldehyde. Examples of the aldehyde include formaldehyde and paraformaldehyde. In addition, methylol groups of the methylolated melamine resin may be partially or completely etherified with an alcohol to be used. Examples of the alcohol available for etherification include methanol, ethanol, n-propanol, isopropanol, n-butanol, isobutanol, 2-ethylbutanol, and 2-ethylhexanol. Specific examples of the melamine resin include ones manufactured by Nihon Cytec Industries Inc., under the trade name of "CYMEL 303", "CYMEL 323", "CYMEL 325", "CYMEL 327", "CYMEL 350", "CYMEL 370", "CYMEL 380", "CYMEL 385", "CYMEL 212", "CYMEL 251", "CYMEL 254" and "MYCOAT 776". In the case where the melamine-based curing agent is used together, the addition of an acidic compound as a catalyst is effective. Examples of the acidic compound include carboxylic acid, sulfonic acid, acidic phosphate esters, and phosphite esters.

Examples of the carboxylic acid include acetic acid, lactic acid, succinic acid, oxalic acid, maleic acid, and decanedicarboxylic acid. Examples of the sulfonic acid include para-toluenesulfonic acid, dodecylbenzenesulfonic acid, and dinonylnaphthalenedisulfonic acid. Examples of the acidic phosphate esters include dimethylphosphate, diethylphosphate, dibutylphosphate, dioctylphosphate, dilaurylphosphate, monomethylphosphate, monoethylphosphate, monobutylphosphate, and monooctylphosphate. Examples of the phosphite ester include diethyl phosphite, dibutyl phosphite, dioctyl phosphite, dilauryl phosphite, monoethyl phosphite, monobutyl phosphite, monooctyl phosphite, and monolauryl phosphite.

The epoxy resin is a resin having at least two epoxy groups in a molecue thereof. Specific examples of the epoxy resin include: bisphenol-type epoxy resins obtained by adding epichlorohydrin to bisphenol; novolac-type epoxy resins obtained by adding epichlorohydrin to a phenol novolac resin; and polyethylene glycol diglycidyl ether. The epoxy resin may be dispersed in water, as needed, to be used.

Although the polyurethane resin is not particularly limited, provided that the polyurethane resin is generally used as a coating material, the polyurethane resin is preferably a chain-extended polyurethane resin obtained by reaction of an isocyanate group and a polyol.

Examples of the polyurethane resin include: polyurethane resins having a carboxyl group, obtained by using a carboxyl-group containing polyol as one of polyols, and polyurethane resins having a hydroxyl group at the terminal thereof. As the polyurethane resin having a carboxyl group, a carboxyl group containing-polyurethane resin neutralzed with a basic substance is preferable. Examples of the carboxyl group containing-polyurethane resin commercially available include: trade names of "Super Flex series 110", "Super Flex series 150" and "Super Flex series 460S", manufactured by DKS Co., Ltd, and trade names of "NeoRez R9649" and "NeoRez R966" manufactured by Avecia Ltd.

Examples of the oxazoline group-containing compound include: polymeric compounds having at least two oxazoline groups at the side chain thereof; and monomeric compounds having at least two oxazoline groups in a molecule

thereof.

The carbodiimide group-containing compound may be obtained by reacting isocyanate groups of the polyisocyanate compounds each other to remove carbon dioxide. Examples of the carbodiimide group-containing compound commercially available include: trade names of" CARBODILITE V-02", "CARBODILITE V-02-L2", "CARBODILITE V-04", "CARBODILITE E-01" and "CARBODILITE E-02", manufactured by Nisshinbo Industries Co., Ltd.

The hydrazide group-containing compound is a compound having at least two hydrazide groups represented by $-CO-NH-NH_2$ in a molecule thereof, and preferably a compound having 2 to 10 hydrazide groups in a molecule thereof. Specific examples of the hydrazide group-containing compound include: saturated dicarboxylic acid dihydrazides having 2 to 18 carbon atoms, such as oxalic acid dihydrazide, malonic acid dihydrazide, glutaric acid dihydrazide, succinic acid dihydrazide, adipic acid dihydrazide, and sebacic acid dihydrazide; monoolefin unsaturated dicarboxylic acid dihydrazides, such as maleic acid dihydrazide, fumaric acid dihydrazide, or itaconic acid dihydrazide; and polyhydrazides obtained by reacting a low-molecular polymer having a carboxylic acid lower-alkyl ester group with a hydrazine or a hydrazine hydrate.

The semicarbazide group-containing compound is a compound having at least two semicarbazide groups represented by $-NH-CO-NH-NH_2$ in a molecule thereof, and is preferably a compound having 2 to 10 semicarbazide groups in a molecule thereof. Specific examples of the semicarbazide group-containing compound include: bissemicarbazide; and polyfunctional semicarbazides obtained by reacting a diisocyanate such as hexamethylene diisocyanate or isophorone diisocyanate or a polyisocyanate compound derived from the diisocyanate with a N,N-substituted hydrazine such as N,N-dimethylhydrazine or the above-exemplified hydrazine.

The coating composition or the aqueous coating composition may further contain various additives such as organic solvents, curing accelerating catalysts, antioxidants, ultraviolet absorbers, photostabilizers, pigments, leveling agents, plasticizers, or surfactants, depending on the purpose or intended use.

Examples of the organic solvent include: the above-mentioned solvents that exhibits the tendency of the miscibility against water; aliphatic hydrocarbon-based solvents such as hexane, heptane, and octane; alicyclic hydrocarbon-based solvents such as cyclohexane and methylcyclohexane; ketone-based solvents such as acetone, methylethylketone, methylisobutylketone, and cyclohexanone; ester-based solvents such as methyl acetate, ethyl acetate, butyl acetate, isobutyl acetate, methyl lactate, and ethyl lactate; aromatic-based solvents such as toluene, xylene, diethylbenzene, mesitylene, anisole, benzyl alcohol, phenyl glycol, and chlorobenzene; glycol-based solvents such as ethylene glycol monoethyl ether acetate, 3-methyl-3-methoxybutyl acetate, dipropylene glycol monomethyl ether, propylene glycol monomethyl ether, and propylene glycol monomethyl ether acetate; ether-based solvents such as diethyl ether, tetrahydrofuran and dioxane; halogenated hydrocarbon-based solvents such as dichloromethane, 1,2-dichloroethane and chloroform; pyrrolidone-based solvents such as N-methyl-2-pyrrolidone; amide -based solvents such as N,N-dimethylacetamide, N,N-dimethylformamide; sulfoxide-based solvents such as dimethyl sulfoxide; lactone-based solvents such as $\gamma$-butyrolactone; amine-based solvents such as morpholine; and mixtures thereof. These organic solvent may be used alone or in combination of at least two thereof.

Examples of the curing accelerating catalyst include: tin-based compounds such as dibutyltin dilaurate, dibutyltin diacetate, dioctyltin dilaurate, dimethyltin dineodecanoate, and bis(2-ethylhexanoate)tin; zinc compounds such as zinc 2-ethylhexanoate and zinc naphthenate; titanium compounds such as titanium 2-ethylhexanoate and titanium diisopropoxy bis(ethylacetonate); cobalt compounds such as cobalt 2-ethylhexanoate and cobalt naphthenate; bismuth compounds such as bismuth 2-ethylhexanoate and bismuth naphthenate; zirconium compounds such as zirconium tetraacetylacetonate, zirconyl 2-ethylhexanoate, and zirconyl naphthenate; and amine compounds.

Examples of the antioxidant include hindered phenol-based compounds, phosphorus-based compounds and sulfur-based compounds.

Examples of the ultraviolet absorber include benzotriazole-based compounds, triazine-based compounds, and benzophenone-based compounds.

Examples of the photostabilizer include hindered amine-based compounds, benzotriazole-based compound, triazine-based compound, benzophenone-based compound, and benzoate-based compound.

Examples of the pigment include titanium oxide, carbon black, indigo, pearl mica, and aluminum. Examples of the leveling agent include silicone oils.

Examples of the plasticizer include phthalic acid esters, phosphate-based compounds and polyester-based compounds.

Examples of the surfactant include the above-mentioned surfactants, conventionally-known anionic surfactants, cationic surfactants, and amphoteric surfactants.

The coating composition or the aqueous coating composition may be used as a coating composition, a tackifier composition, an adhesive compositions, a curable composition to be used in a casting compositions, various surface treatment compositions such as a fiber treatment composition, various elastomer compositions or a crosslinking agent of a foam compositions, a modifier, or an additive.

When used as a coating composition, the coating composition is preferably applied on various materials to

form a primer coating, an intermediate coating, or a top coating by conducting roll coating, curtain flow coating, spray coating, electrostatic coating, bell coating. In addition, the coating composition is preferably applied on a precoated metal such as an anticorrosive steel plate, automobile coating, plastic coating to provide beautiful appearance, weather resistance, acid resistance, rust resistance, chipping resistance, adhesiveness.

The coating composition is coated by conducting roll coating, curtain flow coating, spray coating, electrostatic coating, or bell coating, followed by conducting baking process to form a coating film. It is preferable that the coating film be crosslinked after subjecting the coating composition to the baking process. In the case where multilayer coating or recoating is conducted, the crosslinked coating film formed by curing the coating composition allows the formation of hydrogen bonding between layers, and therefor the adhesiveness between the layers becomes excellent, in addition to the chemical resistance, heat resistance and water resistance. Even in the case where the coating film is not compleltey crosslinked after the baking process, an excellent adhesiveness is realized by conducting multilayer coating or recoating, and thus the coating film is excellent in the same way as the crosslinked coating film. In the case where the coating liqud is applied by a wet-on-wet technique to form several layers in the same way as line coating for new automobiles, an organic amine compound which is present in the coating composition or the crosslinked coating film after the curing process may serve as a catalyst of the crosslinking reaction in the lower layer or the upper layer.

In the case when used as a tackifier composition or an adhesive composition, the composition may be diluted with various solvents, water, to be used as a coating solution, from the viewpoint of the workability when applied to an adherend and the easiness in making film thin.

Among these, it is preferable that water be used as a dilution medium from the viewpoint of protection of the global environment. It is preferable that the amount of the solvent used in the dilution medium be 30% by mass or less, more preferably 20% by mass or less, even more pferably 10% by mass or less, and even more preferably the dilution medium consists of water. It is preferable that the solid content of all binder resin components in the coating liquid be 1% by mass to 30% by mass, and more preferably 2% by mass to 20% by mass.

Examples of the application filed when used as the tackifier composition or the adhesive composition inlucde automobiles, building materials, home appliances, wood, and laminates for solar cell. Among these, optical members of liquid crystal displays of home appliances, such as television, personal computer, digital camera, or mobile phone, are required to be formed by laminating films or plates of various adherends so as to express various functions. Sufficient tackifiness and/or adhesiveness is required between films or plates of the various adherends, and thus the tackifier composition or the adhesive composition is preferably used.

<Coating base material>

A coating base material may include: a substrate; and a coating film formed with the above-mentioned coating composition or the above-mentioned aqueous coating composition.

Although the substrate is not limited to the followins, examples thereof include: glass, various metals such as aluminum, iron, galvanized steel, copper, and stainless; porous members, such as wood, paper, mortar, and stone; members coated with fluorine, urethane, or acrylic urethane; cured products of sealing agents such as silicone-based, modified silicone-based, or urethane-based sealing agents; rubbers such as vinyl chloride, natural rubbers, and synthetic rubbers; leathers such as natural leathers, and artificial leathers; fibers such as plant-based fibers, animal-based fibers, carbon fibers, and glass fibers; nonwoven fabrics, films or plates of resins such as polyester, acryl, polycarbonate, triacetylcellulose, or polyolefin; UV-curable acrylic resin layer, and inks such as printing ink and UV ink. A conventional primer coating may be provided before conducting coating, depending on the situation.

## Examples

The physical properties of polyisocyanate compositions and blocked polyisocyanate compositions in the following examples and comparative examples were measured as described below. The terms "parts" and "%" means "parts by mass" and "% by mass", respectively, unless otherwise specified.

(Physical property 1) Viscosity

The viscosity was measured at 25°C using an E-type viscometer (manufactured by Tokimec, Inc.). In the measurement, a standard rotor (1° 34' × R24) was used. The number of rotaion was shown below.

100 r.p.m. (at less than 128 mPa • s)
50 r.p.m. (at 128 mPa • s or more but less than 256 mPa • s)
20 r.p.m. (at 256 mPa • s or more but less than 640 mPa • s)
10 r.p.m. (at 640 mPa • s or more but less than 1280 mPa • s)

5 r.p.m. (at 1280 mPa • s or more but less than 2560 mPa • s)
2.5 r.p.m. (at 2560 mPa • s or more but less than 5120 mPa • s)
1.0 r.p.m. (at 5120 mPa • s or more but less than 10240 mPa • s)
0.5 r.p.m. (at 10240 mPa • s or more but less than 20480 mPa • s)

(Physical property 2) Amount ratio of isocyanate groups

The amount ratio of isocyanate groups, relative to the total mass of the polyisocyanate, was determined in accordance with the method described in JIS K7301-195 (method for testing tolylene diisocyanate-type prepolymers for thermosetting urethane elastomers). Hereinafter, the method for measuring the amount ratio of isocyanate groups will be explained further specifically.

(1) 1 g of a sample was put in a 200 ml conical flask, 20 ml of toluene was added to the flask, and then the sample was dissolved.
(2) Then, 20 mL of 2.0 N di-n-butylamine - toluene solution was added to the flask, and then left still for 15 minutes.
(3) 70 ml of 2-propanol was added to the flask, and then dissolved to obtain a solution.
(4) The solution obtained in the step (3) was subjected to titration using 1 mol/L hydrochloric acid to measure the titration amount of the sample.
(5) The blank titration amount was measured in the same way as the above-menionted steps (1) to (3) except that the sample was not added.

The amount ratio of isocyanate groups was calculated from the titration amount and the blank titration amount, determined above, using the following formula (6).

$$\text{Amount ratio of isocyanate groups (\% by mass)} = \frac{(\text{Blank titration amount - sample titration amount}) \times 42}{1(\text{g}) \times 1{,}000} \times 100\% \qquad (6)$$

(Physical property 3) Peak area ratio of poly(oxyalkylene) alkylether phosphate

The peak area ratio of the poly(oxyalkylene) alkylether phosphate, relative to the bis(2-ethylhexyl)phosphate, in the polyisocyanate composition was measured by the method described below.

(1) 1.0 g of a sample prepared with water such that the amount of the polyisocyanate composition was 30% by mass was weighed, measured up to 10 ml with a 50% aqueous methanol solution, and then mixed to obtain a methanol solution containing 0.03 g/mL of polyisocyanate composition.
(2) Equal amounts of the solution obtained in the step (1) and a methanol solution containing 1000 ppm of bis(2-ethylhexyl)phosphate were mixed to obtain a measurement sample.
(3) LC-MS (Liquid Chromatograph Mass Spectormeter) measurement was conducted in the conditions described below, and the peak area value of the poly(oxyalkylene) alkylether phosphate calculated from the mass chromatogram of the maximum ion in the mass spectrum of the poly(oxyalkylene) alkylether phosphate by the peak area value of the bis(2-ethylhexyl)phosphate calculated from the mass chromatogram (m/z 645.46 ± 0.1) of the bis(2-ethylhexyl)phosphate to obtain the peak area ratio of the poly(oxyalkylene) alkylether phosphate, relative to the bis(2-ethylhexyl)phosphate.

$$\text{Peak area raio} = \frac{\text{Peak area value of poly(oxyalkylene) alkyl ether phosphate}}{\text{Peak area value of bis(2-ethylhexyl)phosphate}}$$

LC apparatus: Waters, UPLC
Column: YMC, Triart C8 1.9 um 12 nm (2.1 mm I.D. × 50 mm)
Column temperature: 40°C
Detection method: PDA 200 nm to 800 nm
Flow rate: 0.2 mL/min
Mobile phase: A = 10 mM ammonium acetate,
B = acetonitrile

| Gradient time (min.) | A% | b% |
|---|---|---|
| 0 | 95 | 5 |
| 10 | 0 | 100 |
| 15 | 0 | 100 |
| 15.1 | 95 | 5 |
| 20 | 95 | 5 |

Injection volume 1 μL
MS apparatus: Waters, Synapt G2
Ionization: ESI+
Scan range: m/z 100 to 1500

(Physical property 4) Amount of phosphorus atom (concentration of phosphorus)

The amount of phosphorus in the polyisocyanate composition (mass base) was measured by the method described below. Firs, approximately 1.5 g of a sample was weighed in a conical beaker, 20 m of concentrated sulfuric acid was added thereto, and then the mixture was heated on a heater. After 4 hours heating, 5 mL of hydrogen peroxide solution was added to the resultant. Then, the mixture was concentrated on a heater until the volume of the decomposition solution became approximately 3 mL to 5 mL. After the resultant was cooled, the resultant was poured into a 50 mL centrifuge tube with pure water, measured up to 50 mL, and then mixed to obtain a measurement sample. The measurement sample was introduced into a plasma optical emission spectrometer set at a wavelength of 213.618 nm to conduct quantification.

Apparatus: Plasma optical emission spectrometer manufactured by Thermo Fisher Scientific

Model: iCAP 6300 Duo
Measurement wavelength: 213.618 nm

(Preparation Example 1)

Poly(oxyalkylene) alkylether phosphate A-1

70.2 g of polyethylene glycol monomethyl ether having a number average molecular weight of 428 (manufactured by Nippon Nyukazai Co., Ltd., under the trade name of "MPG-130" (the average number of ethylene oxide repeating units: 9.0)) and 86.9 g of 2-ethylhexyl acid phosphate (manufactured by JOHOKU CHEMICAL CO., LTD., under the trade name of "JP-508T", monoester / diester (mole ratio) = 1/1) were charged in a four-necked flask equipped with a stirrier, a thermometer, a reflux condenser, a nitrogen inlet tube and a dropping funnel in a nitrogen atmosphere, and then the temperature in the flask was maintained at 120°C for 4 hours while conducting stirring to obtain poly(oxyethylene)alkyl ether phosphate as poly(oxyalkylene) alkylether phosphate A-1.

(Preparation Example 2)

Poly(oxyalkylene) alkylether phosphate A-2

35.6 g of polyethylene glycol monomethyl ether having a number average molecular weight of 217 (manufactured by Nippon Nyukazai Co., Ltd., under the trade name of "MPG" (the average number of ethylene oxide repeating units: 4.2)) and 86.9 g of 2-ethylhexyl acid phosphate (manufactured by JOHOKU CHEMICAL CO., LTD., under the trade name of "JP-508T", monoester / diester (mole ratio) = 1/1) were charged into a four-necked flask equipped with a stirrier, a thermometer, a reflux condenser, a nitrogen inlet tube and a dropping funnel in a nitrogen atmosphere, and then the temperature in the flask was maintained at 120°C for 4 hours while conducting stirring to obtain a poly(oxyethylene)alkyl ether phosphate as poly(oxyalkylene) alkylether phosphate A-2.

(Preparation Example 3)

Poly(oxyalkylene) alkylether phosphate A-3

113 g of polyethylene glycol monomethyl ether having a number average molecular weight of 692 (manufactured

by Nippon Nyukazai Co., Ltd., under the trade name of "MPG-081" (the average number of ethylene oxide repeating units: 15.0) and 86.9 g of 2-ethylhexyl acid phosphate (manufactured by JOHOKU CHEMICAL CO., LTD., under the trade name of "JP-508T", monoester / diester (mole ratio) = 1/1) were charged into a four-necked flask equipped with a stirrier, a thermometer, a reflux condenser, a nitrogen inlet tube and a dropping funnel in a nitrogen atmosphere, and then the temperature in the flask was maintained at 120°C for 4 hours while conducting stirring to obtain a poly(oxyethylene)alkyl ether phosphate as poly(oxyalkylene) alkylether phosphateA-3.

(Preparation Example 4)

Preparation of aqueous dispersion of acryl-based polyol

300 parts of ethylene glycol monobutyl ether was charged into a four-necked separable flask equipped with a stirrier, a thermometer, a reflux condenser, a nitrogen inlet tube and a dropping funnel in a nitrogen atmosphere, and then the temperature in the flask was maintained at 80°C while conducting stirring. Then, a uniform mixture composed of 146.3 parts of methyl methacrylate, 105 parts of styrene, 257.6 parts of n-butyl acrylate, 14 parts of methacrylic acid, and 177.1 parts of 2-hydroxyethyl methacrylate, as monomers, 0.7 parts of 2,2'-azobisisobutyronitrile as a polymerization initiator, and 0.3 parts of n-dodecyl mercaptan as a chain transfer agent, was added thereto continuously over 4.5 hours at a constant rate. Then, the temperature of the flask was further maintained at 80°C for 2 hours. Then, the flask was cooled, 11.6 parts of an aqueous solution containing 25% ammonia was added to the resultant, and conducting stirring for 15 minutes. Then, 1300 parts of ion-exchanged water was added to the resultant while conducting stirring to obtain an aqueous dispersion, and then the aqueous dispersion was concentrated using a rotary evaporator until the solid content thereof became approximately 45% by mass. Then, the pH of the resultant was adjusted to 8.0 with an aqueous solution containing 25% ammonia to obtain an aqueous dispersion of an acryl-based polyol. The average particle diameter of the resultant aqueous dispersion was 90 nm, the concentration of hydroxyl groups of the polyol resin, caluculated from the amount of the charged raw materials, was 3.3% by mass, and the number average molecular weight was 9600.

(Example 1)

0.016 parts by mass of the poly(oxyalkylene) alkylether phosphate A-1 obtained in Preparation Example 1 was added to 90 parts by mass of a polyisocyanate (manufactured by Asahi Kasei Corporation, under the trade name of "TL A-100", indicated as "polyisocyanate B-1" in tables), and the mixture was stirred at 40°C for 1 hour under nitrogen to obtain a polyisocyanate composition.

(Examples 2 to 4 and Comparative Examples 1 and 2)

Polyisocyanate compositions were obtained in the same way as that of Example 1, except that raw materials were used as hown in Table 1. In the table, polyisocyanate B-2 was manufactured by Asahi Kasei Corporation, under the trade name of "TUL-100", and poly(oxyalkylene) alkylether phosphate A-4 was manufactured by TOHO Chemical Industry Co., Ltd., under the trade name of "PHOSPHANOL RS-410".

(Example 5)

Preparation of aqueous two-component-type coating composition

40 g of the aqueous dispersion of polyol prepared in Preparation Example 4 was weighed in a container, 0.15 g of a leveling agent Byk348 and 0.19 g of TegoWet 270 were added thereto, and then the mixture was stirred for 1 minute with a spatula. 3.2 g of a mixture prepared by mixing 37.5 parts of a dispersing agent, DISPERBYK 192, and 62.5 parts of a propylene glycol n-propyl ether was added to the resultant, and stirred for 1 minute with a spatula. To the resultant, a mixture prepared by mixing 72.5 parts of the polyisocyanate composition prepared in Example 1 as a curing agent with 27.5 parts of ethylene glycol monobutyl ether acetate as a dilution solvent was added such that the mole ratio of isocyanate groups relative to hydroxyl groups, NCO/OH, became 1.2 (in an amount of 10.5 g), and the mixture was stirred for 10 minutes with a spatula to otabin a coating composition.

Additional coating compositions were prepared in the same way as mentioned above, except that the polyisocyanate compositions prepared in Example 2 to 4 were used instead of the polyisocyanate composition prepared in Example 1, respectively.

The viscosity of the prepared coating compositions was adjusted with an ion-exchanged water such that the flow time in accordance with JIS K 5600-2-2 using a Ford cup No. 4 became 18 seconds to 22 seconds, and the coating compositions were coated with an air-spray such that the dry film thickness became approximately 40 micrometers, to

evaluate the coating films. The evaluation results are shown in Table 1.

(Evaluation 1) Water dispersibility of aqueous coating composition

After the above-mentioned aqueous coating compositions were prepared, the presence or the absence of deposits on the disper blade was observed visually.
The evaluation criteria was described below.

A: No deposit was observed.
B: A small amount of deposit was observed (the thickness of the deposit on the disper blade was less than 1 mm.)
C: A large amount of deposit was observed (the thickness of the deposit on the disper blade was 1 mm or more.)

(Evaluation 2) Gloss of coating film

The aqueous coating compositions were coated on glass plates to form coating films having a thickness of 40 μm, and then the coating films were dried at 23°C / 50% RH for 7 days.
The gloss was measured using "SUGA UGV-6P" (trade name) manufactured by Suga Test Instruments Co., Ltd., at a defined angle (60°).
The evaluation criteria was described below.

A: 90 or more
B: 86 or more but less than 90
C: less than 86

(Evaluation 3) Yellowing upon baking coating film

The aqueous coating compositions were coated on glass plates to form coating films having a thickness of 40 μm, and then left still at room temperature for 15 minutes, and then baked at 120°C for 30 minutes to obtain cured coating films.
The yellowing of the cured coating films were measured with "SUGA SM-T45" (trade name) manufactured by Suga Test Instruments Co., Ltd. The yellowing degrees were evaluated by Δb.
The evaluation criteria was described below.

A: less than 2.0

B: 2.0 or more

(Evaluation 4) Hardness of coating film

The aqueous coating compositions were coated on glass plates to form coating films having a thickness of 40 μm, and then the coating films were dried at 23°C / 50% RH for 7 days. The pencil hardness test was conducted in accordance with JIS-K-5600-5-4.
The evaluation criteria was described below.

A: 2H or more
B: H
C: F or less

Table 1

| | | Example 1 | Example 2 | Example 3 | Example 4 | Comparative Example 1 | Comparative Example 2 |
|---|---|---|---|---|---|---|---|
| Polyisocyanate | B - 1 | 100 | | 100 | 100 | 100 | 100 |
| | B - 2 | | 100 | | | | |

(continued)

| | | Example 1 | Example 2 | Example 3 | Example 4 | Comparative Example 1 | Comparative Example 2 |
|---|---|---|---|---|---|---|---|
| Poly(oxyalkylene) alkylether phosphate | A - 1 | 0.016 | 0.016 | 0.045 | | | 0.192 |
| | A - 4 | | | | 0.045 | | |
| Poly(oxyalkylene) alkylether phosphate | Area ratio | 1.6 | 1.6 | 4.6 | 1.6 | less than 0.1 | 19.4 |
| Phosphorus atom | by mass | 10 | 10 | 28 | 10 | less than 1 | 124 |
| Dispersibility | | B | A | A | A | C | A |
| Gloss | | B | B | B | B | B | B |
| Yellowing upon baking | | A | A | A | A | A | B |
| Hardness | | A | A | A | A | A | A |

(Physical property 5) Non-volatile content

In the case where the solvent dilution was conducted using the polyisocyanate composition as a sample, the mass of aluminum cup was measured, approximately 1g of the sample was placed in the cup, and then the mass of the resultant cup was measured before conducting heat-drying. The cup having the placed sample was heated for 3 hours in a dryer at 105°C. The heated cup was cooled to room temperature, and then the mass of the resultant cup was measured again. The mass % of the remaining content of the sample was determined as the non-volatile content. The non-volatile content was calculated by the method described below. In the case where the solvent dilution was not conducted, the non-volatile content is deemed as substantially 100%.

$$\text{Non-volatile content (\% by mass)} = \frac{\text{the mass of cup after heat-drying - the mass of aluminum cup}}{\text{the mass of cup before heat-drying-the mass of aluminum cup}} \times 100\%$$

(Physical property 6) Ratio of modified poly(oxyalkylene) monoalkyl ether (modification ratio)

The ratio of the modified poly(oxyalkylene) monoalkyl ether, relative to 100 equivalents of isocyanate groups of polyisocyanate used as a raw material, was indicated as the modification ratio (%), and determined from the peak area ratios of unmodified isocyanurate trimers, 1 modified isocyanurate trimers, 2 modified isocyanurate trimers, and 3 modified isocyanurate trimers, at 220 nm of liquid chromatography (LC). The used apparatus and conditions are described below.

LC apparatus: UPLC (trade name) manufactured by Waters Co., Ltd.
Column: ACQUITY UPLC HSS T3 1.8 μm C18 with an inner diameter of 2.1 mm and a length of 50 mm, manufactured by Waters Co., Ltd.
Flow rate: 0.3 mL/min
Mobile phase: A = 10 mM aqueous ammonium acetate solution, B = acetonitrile
Gradient conditions: The initial mobile phase was composed of A and B at a ratio A/B of 98/2, the ratio of B was linearly increased after the injection of the sample, and, after 10 minutes, the ratio A/B became 0/100.
Detection method: A photodiode array detector was used at a measurement wavelength of 220 nm

(Evaluation 5) Turbidity

10 g of the polyisocyanate composition was put in a 25 ml glass sample bottle, and the turbidity was observed. The evaluation criteria are described below.

A: Transparent and no floating substance was observed.
B: Transparent but a small amount of floating substance was observed.
D: Cloudy and floating substance was observed.

(Preparation Example 5)

Mixture A composed of poly(oxyalkylene) monoalkyl ether and ionic surfactant

A polyethylene glycol monomethyl ether having a number average molecular weight of 428 (manufactured by Nippon Nyukazai Co., Ltd., under the trade name of "MPG-130" (the average number of ethylene oxide repeating units: 9.0)) and a sodium dialkyl sulfosuccinate (anionic surfactant manufactured by Nippon Nyukazai Co., Ltd., under the trade name of "Newcol 290M, with a non-volatile content of 70% by mass" were mixed such that the solid content ratio thereof became 10:1, and then the volatile components in the Newcol 290M (water and solvent (methanol)) were removed by conducting vacuum distillation at 120°C and 20 Torr to obtain a mixture composed of the poly(oxyalkylene) monoalkyl ether and the ionic surfactant.

(Preparation Example 6)

Mixture B composed of poly(oxyalkylene) monoalkyl ether and ionic surfactant

A polyethylene glycol monomethyl ether having a number average molecular weight of 428 (manufactured by Nippon Nyukazai Co., Ltd., under the trade name of "MPG-130" (the average number of ethylene oxide repeating units: 9.0)) and a sodium dialkyl sulfosuccinate (anionic surfactant manufactured by Nippon Nyukazai Co., Ltd., under the trade name of "Newcol 290M" with a non-volatile content of 70% by mass) were mixed such that the solid content ratio thereof became 10:2, and then the volatile components in the Newcol 290M (water and solvent (methanol)) were removed by conducting vacuum distillation at 120°C and 20 Torr to obtain a mixture composed of the poly(oxyalkylene) monoalkyl ether and the ionic surfactant.

(Preparation Example 7)

Mixture C composed of poly(oxyalkylene) monoalkyl ether and ionic surfactant

A polyethylene glycol monomethyl ether having a number average molecular weight of 428 (manufactured by Nippon Nyukazai Co., Ltd., under the trade name of "MPG-130" (the average number of ethylene oxide repeating units: 9.0)) and a sodium dialkyl sulfosuccinate (anionic surfactant manufactured by Nippon Nyukazai Co., Ltd., under the trade name of "Newcol 290M" with a non-volatile content of 70% by mass) were mixed such that the solid content ratio thereof became 10:5, and then the volatile components in the Newcol 290M (water and solvent (methanol)) were removed by conducting vacuum distillation at 120°C and 20 Torr to obtain a mixture composed of the poly(oxyalkylene) monoalkyl ether and the ionic surfactant.

(Example 6)

10 parts by mass of polyethylene glycol monomethyl ether having a number average molecular weight of 428 (manufactured by Nippon Nyukazai Co., Ltd., under the trade name of "MPG-130"(the average number of ethylene oxide repeating units: 9.0) and 0.016 parts by mass of the poly(oxyalkylene) alkylether phosphate A-1 prepared in Preparation Example 1 were added to 90 parts by mass of a polyisocyanate (manufactured by Asahi Kasei Corporation, under the trade name of "TPA-100"), and then the mixture was stirred under nitrogen at 120°C for 3 hours to allow the reaction to proceed. After the completion of the reaction, a composition containing a modified polyisocyanate was obtained.
In the obtained composition, the non-volatile content was 100%, the amount ratio of isocyanate groups was 19.6% by mass, and the viscosity was 1600 mPa • s. The modification ratio of the polyethylene glycol monomethyl ether in the obtained composition was 4.3%.

(Example 7)

10 parts by mass of a polyethylene glycol monomethyl ether having a number average molecular weight of 428 (manufactured by Nippon Nyukazai Co., Ltd., under the trade name of "MPG-130"(the average number of ethylene oxide repeating units: 9.0)) and 0.045 parts by mass of the poly(oxyalkylene) alkylether phosphate A-1 obtained in Preparation Example 1 were added to 90 parts by mass of polyisocyanate (manufactured by Asahi Kasei Corporation,

under the trade name of "TPA-100"), and the mixture was stirred under nitrogen, at 120°C for 3 hours to allow the reaction to proceed. After the completion of the reaction, a composition containing a modified polyisocyanate was obtained.

In the obtained composition, the non-volatile content was 100%, the amount ratio of isocyanate groups was 19.6% by mass, and the viscosity was 1600 mPa • s. The modification ratio of the polyethylene glycol monomethyl ether in the obtained composition was 4.4%.

(Example 8)

10 parts by mass of a polyethylene glycol monomethyl ether having a number average molecular weight of 428 (manufactured by Nippon Nyukazai Co., Ltd., under the trade name of "MPG-130" (the average number of ethylene oxide repeating units: 9.0)) and 0.088 parts by mass of the poly(oxyalkylene) alkylether phosphate A-1 obtained in Preparation Example 1 were added to 90 parts by mass of a polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.

In the obtained composition, the non-volatile content was 100%, the amount ratio of isocyanate groups was 19.5% by mass, and the viscosity was 1600 mPa • s. The modification ratio of the polyethylene glycol monomethyl ether in the obtained composition was 4.2%.

(Example 9)

20 parts by mass of a polyethylene glycol monomethyl ether having a number average molecular weight of 428 (manufactured by Nippon Nyukazai Co., Ltd., under the trade name of "MPG-130"(the average number of ethylene oxide repeating units: 9.0)) and 0.045 parts by mass of the poly(oxyalkylene) alkylether phosphate A-1 obtained in Preparation Example 1 were added to 80 parts by mass of a polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.

In the obtained composition, the non-volatile content was 100%, the amount ratio of isocyanate groups was 16.8% by mass, and the viscosity was 1700 mPa • s. The modification ratio of the polyethylene glycol monomethyl ether in the obtained composition was 10.7%.

(Example 10)

25 parts by mass of a polyethylene glycol monomethyl ether having a number average molecular weight of 428 (manufactured by Nippon Nyukazai Co., Ltd., under the trade name of "MPG-130"(the average number of ethylene oxide repeating units: 9.0)) and 0.045 parts by mass of the poly(oxyalkylene) alkylether phosphate A-1 obtained in Preparation Example 1 were added to 75 parts by mass of polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.

In the obtained composition, the non-volatile content was 100%, the amount ratio of isocyanate groups was 14.6% by mass, and the viscosity was 1720 mPa • s. The modification ratio of the polyethylene glycol monomethyl ether in the obtained composition was 14.2%.

(Example 11)

11.0 parts by mass of the mixture A composed of the poly(oxyalkylene) monoalkyl ether and the ionic surfactant obtained in Preparation Example 5 and 0.015 parts by mass of the poly(oxyalkylene) alkylether phosphate A-1 obtained in Preparation Example 1 were added to 90 parts by mass of a polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.

In the obtained composition, the non-volatile content was 100%, the amount ratio of isocyanate groups was 19.5% by mass, and the viscosity was 1600 mPa • s. The modification ratio of the polyethylene glycol monomethyl ether in the obtained composition was 4.5%.

(Example 12)

12.0 parts by mass of the mixture B composed of the poly(oxyalkylene) monoalkyl ether and the ionic surfactant obtained in Preparation Example 6 and 0.015 parts by mass of the poly(oxyalkylene) alkylether phosphate A-1 obtained in Preparation Example 1 were added to 90 parts by mass of a polyisocyanate (manufactured by Asahi Kasei Corporation,

under the trade name of "TPA-100"), and the mixture was stirred under nitrogen at 120°C for 3 hours to allow the reaction to proceed. After the completion of the reaction, a composition containing a modified polyisocyanate was obtained.
In the obtained composition, the non-volatile content was 100%, the amount ratio of isocyanate groups was 19.5% by mass, and the viscosity was 1600 mPa • s. The modification ratio of the polyethylene glycol monomethyl ether in the obtained composition was 4.5%.

(Example 13)

10 parts by mass of a polyethylene glycol monomethyl ether having a number average molecular weight of 428 (manufactured by Nippon Nyukazai Co., Ltd., under the trade name of "SGG-06009" (the average number of ethylene oxide repeating units: 8.0)) and 0.045 parts by mass of the poly(oxyalkylene) alkylether phosphate A-1 obtained in Preparation Example 1 were added to 90 parts by mass of a polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.
In the obtained composition, the non-volatile content was 100%, the amount ratio of isocyanate groups was 19.4% by mass, and the viscosity was 1550 mPa • s. The modification ratio of the polyethylene glycol monomethyl ether in the obtained composition was 5.3%.

(Example 14)

15.0 parts by mass of the mixture C composed of the poly(oxyalkylene) monoalkyl ether and the ionic surfactant obtained in Preparation Example 7 and 0.015 parts by mass of the poly(oxyalkylene) alkylether phosphate A-1 obtained in Preparation Example 1 were added to 90 parts by mass of a polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.
In the obtained composition, the non-volatile content was 100%, the amount ratio of isocyanate groups was 19.4% by mass, and the viscosity was 1600 mPa • s. The modification ratio of the polyethylene glycol monomethyl ether in the obtained composition was 4.5%.

(Example 15)

10 parts by mass of a polyethylene glycol monomethyl ether having a number average molecular weight of 428 (manufactured by Nippon Nyukazai Co., Ltd., under the trade name of "MPG-130"(the average number of ethylene oxide repeating units: 9.0)) and 0.035 parts by mass of poly(oxyalkylene) alkylether phosphateA-2 obtained in Preparation Example 2 were added to 90 parts by mass of a polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.
In the obtained composition, the non-volatile content was 100%, the amount ratio of isocyanate groups was 19.5% by mass, and the viscosity was 1580 mPa • s. The modification ratio of the polyethylene glycol monomethyl ether in the obtained composition was 4.4%.

(Example 16)

10 parts by mass of a polyethylene glycol monomethyl ether having a number average molecular weight of 428 (manufactured by Nippon Nyukazai Co., Ltd., under the trade name of "MPG-130"(the average number of ethylene oxide repeating units: 9.0)) and 0.057 parts by mass of poly(oxyalkylene) alkylether phosphate A-3 obtained in Preparation Example 3 were added to 90 parts by mass of a polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.
In the obtained composition, the non-volatile content was 100%, the amount ratio of isocyanate groups was 19.6% by mass, and the viscosity was 1600 mPa • s. The modification ratio of the polyethylene glycol monomethyl ether in the obtained composition was 4.4%.

(Example 17)

2 parts by mass of a polyethylene glycol monomethyl ether having a number average molecular weight of 428 (manufactured by Nippon Nyukazai Co., Ltd., under the trade name of "MPG-130"(the average number of ethylene oxide repeating units: 9.0)), 11 parts by mass of the mixture A composed of the poly(oxyalkylene) monoalkyl ether and the

ionic surfactant obtained in Preparation Example 5 and 0.016 parts by mass of the poly(oxyalkylene) alkylether phosphate A-1 obtained in Preparation Example 1 were added to 87 parts by mass of polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.

In the obtained composition, the non-volatile content was 100%, the amount ratio of isocyanate groups was 18.6% by mass, and the viscosity was 1600 mPa • s. The modification ratio of the polyethylene glycol monomethyl ether in the obtained composition was 5.6%.

(Example 18)

10 parts by mass of 3-(cyclohexylamino)-propanesulfonic acid (referred to as CAPS), 5 parts by mass of dimethylcyclohexylamine and 0.054 parts by mass of poly(oxyalkylene) alkylether phosphate A-3 obtained in Preparation Example 3 were added to 85 parts by mass of a polyisocyanate (manufactured by Asahi Kasei Corporation, under the trade name of "TPA-100"), and the mixture was stirred under nitrogen at 80°C for 10 hours to allow the reaction to proceed. After the completion of the reaction, a composition containing a modified polyisocyanate was obtained.

In the obtained composition, the non-volatile content was 100%, the amount ratio of isocyanate groups was 18.0% by mass, and the viscosity was 9200 mPa • s.

(Comparative Example 3)

10 parts by mass of a polyethylene glycol monomethyl ether having a number average molecular weight of 428 (manufactured by Nippon Nyukazai Co., Ltd., under the trade name of "MPG-130"(the average number of ethylene oxide repeating units: 9.0)) was added to 90 parts by mass of a polyisocyanate (manufactured by Asahi Kasei Corporation, under the trade name of "TPA-100"), and the mixture was stirred under nitrogen at 120°C for 3 hours to allow the reaction to proceed. After the completion of the reaction, a composition containing a modified polyisocyanate was obtained.

In the obtained composition, the non-volatile content was 100%, the amount ratio of isocyanate groups was 19.6% by mass, and the viscosity was 1600 mPa • s. The modification ratio of the polyethylene glycol monomethyl ether in the obtained composition was 4.3%.

(Comparative Example 4)

10 parts by mass of a polyethylene glycol monomethyl ether having a number average molecular weight of 428 (manufactured by Nippon Nyukazai Co., Ltd., under the trade name of "MPG-130"(the average number of ethylene oxide repeating units: 9.0)) and 0.192 parts by mass of the poly(oxyalkylene) alkylether phosphate A-1 obtained in Preparation Example 1 were added to 90 parts by mass of a polyisocyanate (manufactured by Asahi Kasei Corporation, under the trade name of "TPA-100"), and the mixture was stirred under nitrogen at 120°C for 3 hours to allow the reaction to proceed. After the completion of the reaction,, a composition containing a modified polyisocyanate was obtained.

In the obtained composition, the non-volatile content was 100%, the amount ratio of isocyanate groups was 19.6% by mass, and the viscosity was 1600 mPa • s. The modification ratio of the polyethylene glycol monomethyl ether in the obtained composition was 4.1%.

(Comparative Example 5)

10 parts by mass of a polyethylene glycol monomethyl ether having a number average molecular weight of 428 (manufactured by Nippon Nyukazai Co., Ltd., under the trade name of "MPG-130"(the average number of ethylene oxide repeating units: 9.0)) was added to 90 parts by mass of a polyisocyanate (manufactured by Asahi Kasei Corporation, under the trade name of "TPA-100"), and the mixture was stirred under nitrogen at 120°C for 3 hours to allow the reaction to proceed. Then, 0.008 parts by mass of 2-ethylhexyl acid phosphate (manufactured by JOHOKU CHEMICAL CO., LTD., under the trade name of "JP-508T" with a monoester / diester (mole ratio) = 1/1) was added to the resultant to obtain a composition containing a modified polyisocyanate.

In the obtained composition, the non-volatile content was 100%, the amount ratio of isocyanate groups was 19.6% by mass, and the viscosity was 1600 mPa • s. The modification ratio of the polyethylene glycol monomethyl ether in the obtained composition was 4.2%.

Various physical properties and evaluation results of the polyisocyanate compositions containing the modified polyisocyanate, obtained in Examples 6 to 18 and Comparative Examples 3 to 5 are shown in Tables 2 and 3.

Aqueous coating compositions for evaluation of the polyisocyanate compositions containing the modified polyisocyanates obtained in Examples 6 to 18 and Comparative Examples 3 to 5 were prepared as described below.

[Aqueous coating composition and coating film]

91.5 parts by mass of MACRYNAL VSM2521W/42WAB (manufactured by Allnex Company, trade name, acryl polyol, solid content 42%, hydroxy group 4.2% by mass), 0.5 parts by mass of BYK 028 (manufactured by BYK, trade name), 0.5 parts by mass of Acrysol RM 5000 (manufactured by the Dow Chemical Company, trade name), 0.5 parts by mass of Acrysol SCT 275 (manufactured by the Dow Chemical Company, trade name), 7.0 parts by mass of deionized water, and 26.3 parts by mass of the polyisocyanate composition obtained in each of the examples were mixed to obtain each aqueous coating compositions. A deionized water was further added to the mixture such that the solid content of the aqueous coating composition was 42%, followed by stirring the mixture with a disper blade at 300 rpm for 5 minutes to obtain the aqueous coating composition. The evaluation of the composition and coating film was conducted using the thus obtained aqueous coating composition. The evaluation results are shown in Tables 2 and 3.

Table 2

| | Polyisocyanate | Poly (oxyalkylene) alkylether phosphate | Hydrophilic components | | Area ratio | Surfactant | Phosphorus amount ppm | Modification ratio % | Addition condition | Viscosity (mPa•s) | Amount ratio of isocyanate groups (% by mass) | Turbidity | Dispersibility | Yellowing upon baking coating film | Gloss of coating film | Hardness of coating film |
|---|---|---|---|---|---|---|---|---|---|---|---|---|---|---|---|---|
| | | | MPEG | Anion | | | | | | | | | | | | |
| Example 6 | trimer 90 parts | A-1 | 9 repeating units 10 parts | | 1.6 | absent | 10 | 4.3 | preaddition 120°C | 1600 | 19.6 | A | B | A | B | A |
| Example 7 | trimer 90 parts | A - 1 | 9 repeating units 10 parts | | 4.6 | absent | 28 | 4.4 | preaddition 120°C | 1600 | 19.6 | A | A | A | A | A |
| Example 8 | trimer 90 parts | A - 1 | 9 repeating units 10 parts | | 9.2 | absent | 59 | 4.2 | preaddition 120°C | 1600 | 19.5 | A | A | A | A | A |
| Example 9 | trimer 80 parts | A - 1 | 9 repeating units 20 parts | | 4.8 | absent | 30 | 10.7 | preaddition 120°C | 1700 | 16.8 | A | A | A | A | C |
| Example 10 | trimer 75 parts | A - 1 | 9 repeating units 25 parts | | 4.6 | absent | 32 | 14.2 | preaddition 120°C | 1720 | 14.6 | A | A | A | A | C |
| Example 11 | trimer 90 parts | A - 1 | 9 repeating units 10 parts | | 1.6 | 1 part | 9 | 4.5 | preaddition 120°C | 1600 | 19.5 | A | A | A | A | A |
| Example 12 | trimer 90 parts | A - 1 | 9 repeating units 10 parts | | 1.6 | 2 parts | 11 | 4.5 | preaddition 120°C | 1600 | 19.5 | A | A | A | A | A |
| Example 13 | trimer 90 parts | A - 1 | 8 repeating units 10 parts | | 4.8 | absent | 32 | 5.3 | preaddition 120°C | 1550 | 19.4 | A | A | A | A | A |

Table 3

| | Polyisocyanate | Poly (oxyalkylene) alkylether phosphate | Hydrophilic components | | Area ratio | Surfactant | Phosphorus amount ppm | Modification ratio % | Addition condition | Viscosity (mPa·s) | Amount ratio of isocyanate groups (% by mass) | Turbidity | Dispersibility | Yellowing upon baking coating film | Gloss of coating film | Hardness of coating film |
|---|---|---|---|---|---|---|---|---|---|---|---|---|---|---|---|---|
| | | | MPEG | Anion | | | | | | | | | | | | |
| Example 14 | trimer 90 parts | A-1 | 9 repeating units 10 parts | | 1.6 | 5 parts | 9 | 4.5 | preaddition 120°C | 1600 | 19.4 | B | B | A | A | B |
| Example 15 | trimer 90 parts | A-2 | 9 repeating units 10 parts | | 3.1 | absent | 29 | 4.4 | preaddition 120°C | 1580 | 19.5 | A | A | A | A | A |
| Example 16 | trimer 90 parts | A-3 | 9 repeating units 10 parts | | 5.6 | absent | 31 | 4.4 | preaddition 120°C | 1600 | 19.6 | A | A | A | A | A |
| Example 17 | trimer 87 parts | A-1 | 9 repeating units 12 parts | | 1.6 | 1 part | 10 | 5.6 | preaddition 120°C | 1540 | 18.6 | A | A | A | A | B |
| Example 18 | trimer 85 parts | A-3 | | 10 parts of CAPS 5 parts of dimethyl hexyl amine | 5.6 | absent | 31 | 0 | preaddition 80 °C | 9200 | 18 | A | A | A | A | A |
| Comparative Example 3 | trimer 90 parts | - | 9 repeating units 10 parts | | less than 0.1 | absent | less than 1 | 4.3 | without addition 120°C | 1600 | 19.6 | A | C | A | B | A |
| Comparative Example 4 | trimer 90 parts | A-1 | 9 repeating units 10 parts | | 19.4 | absent | 124 | 4.1 | preaddition 120°C | 1600 | 19.6 | A | A | B | C | A |

(continued)

| | Polyisocyanate | Poly (oxyalkylene) alkylether phosphate | Hydrophilic components | | Area ratio | Surfactant | Phosphorus amount ppm | Modification ratio % | Addition condition | Viscosity (mPa·s) | Amount ratio of isocyanate groups (% by mass) | Turbidity | Dispersibility | Yellowing upon baking coating film | Gloss of coating film | Hardness of coating film |
|---|---|---|---|---|---|---|---|---|---|---|---|---|---|---|---|---|
| | | | MPEG | Anion | | | | | | | | | | | | |
| Comparative Example 5 | trimer 90 parts | - | 9 repeating units 10 parts | | less than 0.1 | absent | 9 | 4.2 | postaddition 120°C | 1600 | 19.4 | A | C | A | B | B |

(Physical property 5) Concentration of isocyanurate trimer

The polyisocyanate was subjected to gel permeation chromatography (GPC) measurement using the following apparatus to calculate the area % of the peak corresponding to the molecular weight equivalent to three times of the diisocyanate in accordance with the following formula (A) as an amount of isocyanurate trimer (trimer concentration) in the polyisocyante composition.

$$\text{Amount of isocyanulate trimer (\% by mass)} = \frac{\text{Area of the peak corresponding to the molecular weight equivalent to three times of diisocyanate}}{\text{Total peak area}} \times 100 \qquad (A)$$

| | |
|---|---|
| Apparatus: | HLC-8320 manufactured by TOSOH CORPORATION |
| Column: | TSK GEL Super H1000 × 1 column,<br>TSK GEL Super H2000 × 1 column,<br>TSK GEL Super H3000 × 1 column,<br>manufactured by TOSOH CORPORATION |
| Carrier: | tetrahydrofuran |
| Flow rate: | 0.6 mL/minute |
| Sample concentration: | 1.0% by mass |
| Injection volume: | 20 μL |
| Temperature: | 40°C |
| Detection method: | differential refractometer |

(Physical property 6) Mole ratio of allophanate groups to isocyanurate groups

The mole ratio of allophanate groups relative to isocyanurate groups (allophanate groups / isocyanurate groups) in the polyisocyanate or blocked polyisocyanate composition was determined by measurement of proton nuclear magnetic resonance spectra ($^1$H-NMR) using "FT-NMR DPX-400", trade name, manufactured by Bruker.

Specifically, the polyisocyanate composition or the blocked polyisocyanate composition was dissolved in a deuterated chloroform at a concentration of 10% by mass (and 0.03% by mass, with respect to the total mass of the polyisocyanate, of tetramethylsilane was added thereto) to obtain a NMR measurment sample. A hydrogen signal of the tetramethylsilane was defined to be 0 ppm as the chemical shift standard. The NMR measurement sample was measured by $^1$H-NMR and the area ratio of the signal area of hydrogen atoms binding to nitrogen atoms of allophanate groups in the vicinity of 8.5 ppm (1 mol of hydrogen atom, relative to 1 mole of allophanate group), relative to the signal area of hydrogen atoms of methylene groups adjacent to nitrogen atoms of isocyanuarate rings of isocyanurate groups in the vicinity of 3.8 ppm (6 moles of hydrogen atoms, relative to 1 mole of isocyanurate group) was determined to obtain the mole ratio of allophanate groups / isocyanurate groups in accordance with the following formula (C).

$$\text{Allophanate groups / Isocyanurate groups} = \frac{\text{Singal area in the vicinity of 8.5 ppm}}{\text{Singal area in the vicinity of 3.8 ppm / 6}} \qquad (C)$$

(Evaluation 6) Water dispersibility

An aqueous dispersion was prepared with water such that 30% by mass of the blocked polyisocyanate composition was contained, and then the presence or absence of precipitates was observed visually. The case where no precipitate was observed was evaluated as A, and the case where precipitate was observed was evaluated as B.

(Evaluation 7) Storage stability (presence or absence of precipitate)

An aqueous dispersion was prepared with water such that 30% by mass of the blocked polyisocyanate composition was contained therein, stored at 23°C for 1 year, and then the presence or absence of precipitate was observed visually. The case where no precipitate was observed was evaluated as A, and the case where precipitate was observed

was evaluated as B.

(Evaluation 8) Storage stability (change in transmittance)

An aqueous dispersion was prepared with water such that 30% by mass of the blocked polyisocyanate composition was contained therein, stored at 23°C for 1 year, and then the transmittance thereof was measured using an ultraviolet-visible spectrophotometer (ultraviolet-visible spectrophotometer manufactured by JASCO Corporation, type: V-650) with a 1 cm cell at a wavelength of 550 nm. The case where the transmittance was 5% or more was evaluated as A, the case where the transmittance was 1% or more but less than 5% was evaluated as B, and the case where the transmittance was less than 1% was evaluated as C.

(Preparation Example 8) Polyisocyanate B-3

1000 g of 1,6-diisocyanatohexane (hereinafte, also referred to as "HDI"), 100 g of polycaprolactone-based polyestertriol (manufactured by Daicel Corporation under the trade name of "PLACCEL 303", with a molecular weight of 300, hereinafter, also referred to as "PCL 303"), that is a three functional polyol (in which the average number of hydroxy groups was 3), and 30 g of 2-ethylhexanol (hereinafte, also referred to as "2EHOH") were charged into a four-necked flask equipped with a stirrier, a thermometer, a reflux condenser, a nitrogen inlet tube and a dropping funnel in a nitrogen atmosphere, and the temperature in the flask (temperature for urethanization) was maintained at 90°C for 1 hour, while conducting stirring. Thereafter, the temperature in the flask (temperature for isocyanuration) was maintained at 80°C, a tetramethyl ammonium caprylate, that is an isocyanuration catalyst, was added thereto, and then a phosphoric acid was added thereto to stop the reaction at the time when the yield became 50%. The resultant reaction liquid was subjected to filtration, and an unreacted HDI was removed therefrom using a thin film evaporator to obtain a polyisocyanate B-3. Various physical properties of the obtained polyisocyanate is shown in Table 4.

(Preparation Examples 9 and 10) Polyisocyanate B-4 and polyisocyanate B-5

The polyisocyanate B-4 and the polyisocyanate B-5 were obtained in the same way as that of Preparation Example 8, except that raw materials shown in table 4 were charged into the four-necked flask in a nitrogen atmosphere. Various physical properties of the obtained polyisocyanates are shown in Table 4.

Table 4

| | Preparation Example 8 | Preparation Example 9 | Preparation Example 10 |
|---|---|---|---|
| Polyisocyanate | B - 3 | B - 4 | B - 5 |
| HDI | 1000 | 1000 | 1000 |
| PCL303 | 100 | 100 | 0 |
| 2EHOH | 30 | 10 | 0 |
| Viscosity (mPa ▪ s) | 7300 | 14500 | 2700 |
| Amount ratio of isocyante groups (% by mass) | 18.2 | 18.1 | 21.7 |
| Trimer concentration (%) | 36 | 21 | 53 |
| Mole ratio (allophanate groups / isocyanurate groups) | 72/28 | 66/34 | 0/100 |

(Blocked polyisocyanate composition and aqueous dispersion thereof)

(Example 19)

100 g of the polyisocyanate B-3, 35.9 g of a polyethylene glycol monomethyl ether (manufactured by Nippon Nyukazai Co., Ltd., under the trade name of "MPG-081", with a number average molecular weight of 690 and a dispersion degree of 1.1, indicated as "poly(oxyalkylene) monoalkyl ether C-1" in the table), that is a a nonionic-based hydrophilic compound, and 0.038 g of the poly(oxyalkylene) alkylether phosphate A-3 were charged into the same apparatus as

Preparation Example 8, and then the temperature thereof was maintained at 120°C for 4 hours. The temperature of the apparatus was lowered to 60°C, 34.8 g of a methylethylketoxime, that is a blocking agent D-1, was added to the resultant, and then the absence of characteristic absorption of isocyanate groups was confirmed in an infrared spectrum (manufactured by JASCO Corporation under the trade name of "FT/IR-4000") to obtain a blocked polyisocyanate composition. Thereafter, 4393.0 g of water was added to the obtained blocked polyisocyanate composition, and then the mixture was stirred for 30 minutes to obtain an aqueous dispersion. Various physical properties and evaluation results of the obtained blocked polyisocyanate composition are shown in Table 5.

(Examples 20 to 30 and Comparative Examples 6 and 7)

Various blocked polyisocyanate compositions and aqueous dispersions thereof were obtained in the same way as that of Example 19, except that raw materials shown in Tables 5 and 6 were used. Various physical properties and evaluation results of the obtained blocked polyisocyanate compositions are shown in Tables 5 and 6. In the table, the poly(oxyalkylene) monoalkyl ether C-2 was manufactured by Nippon Oil and Fats Company Limited under the trade name of "UNIOX M1000" (with a number average molecular weight of 1000), and the blocking agent D-2 was 3,5-dimethylpyrazole.

Table 5

| | | | Example 19 | Example 20 | Example 21 | Example 22 | Example 23 | Example 24 | Example 25 |
|---|---|---|---|---|---|---|---|---|---|
| Polyisocya nte | B - 3 | g | 100 | | | | | | |
| | B - 4 | g | | 100 | 100 | 100 | 100 | 100 | 70 |
| | B - 5 | g | | | | | | | 30 |
| Poly(oxyalkylene)glycol monoalkyl ether | C-1 | g | 35.9 | 35.7 | 44.6 | 53.5 | 29.7 | 35.7 | 47.3 |
| | C-2 | g | | | | | | | |
| Poly(oxyalkylene) alkylether phosphate | A-3 | g | 0.038 | 0.037 | 0.037 | 0.008 | 0.048 | 0.019 | 0.027 |
| | A-1 | g | | | | | | | |
| Blocking agent | D-1 | g | 34.8 | 34.6 | 33.5 | 32.3 | 35.4 | 34.6 | 35.5 |
| | D-2 | g | | | | | | | |
| Water | | g | 393.0 | 392.0 | 410.2 | 428.2 | 379.6 | 392.0 | 420.9 |
| Poly(oxyalkylene) alkylether phosphate | | Area ratio | 0.6 | 0.6 | 0.6 | 0.1 | 0.8 | 0.3 | 0.4 |
| Phosphorus atom | | ppm by mass | 11 | 11 | 11 | 2 | 15 | 6 | 7 |
| Trimer concentration | | % by mass | 36 | 21 | 21 | 21 | 21 | 21 | 31 |
| Mole ratio (allophante groups / isocyanurate groups) | | - | 72/28 | 66/34 | 66/34 | 66/34 | 66/34 | 66/34 | 46/54 |
| Water dispersibility | | Visually observed | A | A | A | A | A | A | A |
| Storage stability (presence or absence of precipitate) | | Visually observed | A | A | A | A | A | A | A |
| Storage stability (transmittance) | | - | A | A | A | B | A | B | A |

Table 6

| | | | Example 26 | Example 27 | Example 28 | Example 29 | Example 30 | Comparative Example 6 | Comparative Example 7 |
|---|---|---|---|---|---|---|---|---|---|
| Polyisocyante | B-3 | g | | | | | | | |
| | B-4 | g | 100 | 100 | 100 | 100 | | 100 | 100 |
| | B-5 | g | | | | | 100 | | |
| Poly(oxyalkylene) glycol monoalkyl ether | C-1 | g | | 357 | 44.6 | 47.9 | 47.5 | 44.6 | 44.6 |
| | C-2 | g | 43.1 | | | | | | |
| Poly(oxyalkylene) alkylether phosphate | A-3 | g | 0.020 | | 0.020 | 0.038 | 0.041 | 0 | 0.096 |
| | A-1 | g | | 0.037 | | | | | |
| Mixture C of Poly(oxyalkylene) monoalkyl ether and ionic surfactant | | g | | | | 5.6 | 5.6 | | |
| Blocking agent | D-1 | g | 35.4 | 34.6 | | 32.3 | 44.3 | 33.5 | 33.5 |
| | D-2 | g | | | 36.9 | | | | |
| Water | | g | 410.8 | 3920 | 417.8 | 4221 | 447.3 | 410.2 | 410.2 |
| Poly(oxyalkylene) alkylether phosphate | | Area ratio | 0.4 | 0.6 | 0.3 | 0.6 | 0.7 | 0 | 1.5 |
| Phosphorus atom | | ppm by mass | 7 | 14 | 6 | 11 | 11 | 0 | 27 |
| Trimer concentration | | % by mass | 21 | 21 | 21 | 21 | 53 | 21 | 21 |
| Mole ratio (allophante groups / isocyanurate groups) | | - | 66/34 | 66/34 | 66/34 | 66/34 | 0/100 | 66/34 | 66/34 |
| Water dispersibility | | Visually observed | A | A | A | A | A | A | A |
| Storage stability (presence or absence of precipitate) | | Visually observed | A | A | A | A | A | B | B |
| Storage stability (transmittance) | | - | A | A | B | A | B | C | C |

(Evaluation 9) Curability of coating film

The aqueous coating composition was coated with applicator on a polypropylene plate such that the thickeness of the resultant resin film became 50 μm, left still at room temperature for 15 minutes, and then baked at 160°C for 30 minutes to obtain a cured coating film. The coating film was separated and the mass thereof was measured. The coating film (film) was immersed in acetone at 23°C for 24 hours. After immerssing, the coating film was dried at 105°C for 60 minutes, and then the mass thereof was measured. The curability was evaluated in terms of the ratio (gel fraction: %) of the mass after immersion, relative to the mass before immersion. The case where the gel fraction exceeded 85% was evaluated as A, and the case where the gel fraction was less than 85% was evaluated as B.

(Evaluation 10) Gloss of coating film

The aqueous coating composition was coated with an applicator on a glass plate such that the thickeness of the resultant resin film became 50 μm, followed by leaving the resultant still at room temperature for 15 minutes, and then baking the resultant at 160°C for 30 minutes to obtain a cured coating film.

The haze value was measured using "SUGA HDM-2DP", trade name, manufactured by Suga Test Instruments Co., Ltd.

The case where the measured value was less than 1.0 was evaluated as A, and the case where the measured value was 1.0 or more was evaluated as B.

(Evaluation 11) Adhesiveness of coating film

The aqueous coating composition was coated with an applicator on a soft steel plate such that the thickeness of the resultant resin film became 50 μm, followed by leaving the resultant still at room temperature for 15 minutes, and then baking the resultant at 160°C for 30 minutes to obtain a cured coating film. The adhesiveness test was conducted in accordance with JIS K5600-5-6. The case where 90 squares or more were remained from 100 squares was evaluated as A and the case where less than 90 squares were remained was evaluated as B.

(Evaluation 12) Water resistance of coating film

The aqueous coating composition was coated with an applicator on a polypropylene plate such that the thickeness of the resultant resin film became 50 μm, followed by leaving the resultant still at room temperature for 15 minutes, and then baking the resultant at 160°C for 30 minutes to obtain a cured coating film. The cured coating film was immersed in water at 40°C for 24 hours, and then the change in the external appearance before and after the immersion was observed visually, to evaluate the case where no whitening was observed as A and the case where whitening was observed as B.

(Example 31)

100 g of SETAQUA 6510 (manufactured by Nuplex Resin, trade name, acryl polyol, with a solid content of 42% and a hydroxy group conent of 4.2% by mass) and 144.5 g of the aqueous dispersion prepared in Example 19 were mixed to obtain an aqueous coating composition having a solid concentration of 35% by mass. The aqueous coating composition was used to form coating films to evaluate the properties thereof in the same way as in Evaluations 9 to 12. Various evaluation resuls are shown in Table 7.

(Examples 32 to 43 and Comparative Examples 8 and 9)

Evaluations were conducted in the same way as in Example 31, except that aqueous dispersions shown in Tables 7 and 8 are used. Various evaluation results are shown in Tables 7 and 8.

Table 7

| | Example 31 | Example 32 | Example 33 | Example 34 | Example 35 | Example 36 | Example 37 |
|---|---|---|---|---|---|---|---|
| Aqueous dispersion | Example 19 | Example 20 | Example 21 | Example 22 | Example 23 | Example 24 | Example 25 |
| Curability | A | A | A | A | A | A | A |
| Gloss | A | A | A | A | A | A | A |

(continued)

| | Example 31 | Example 32 | Example 33 | Example 34 | Example 35 | Example 36 | Example 37 |
|---|---|---|---|---|---|---|---|
| Ad hesiveness | A | A | A | A | A | A | A |
| Water resista nce | A | A | A | A | A | A | A |

Table 8

| | Example 38 | Example 39 | Example 40 | Example 41 | Example 42 | Comparative Example 8 | Comparative Example 9 |
|---|---|---|---|---|---|---|---|
| Aqueous dispersion | Example 26 | Example 27 | Example 28 | Example 29 | Example 30 | Comparative Example 6 | Comparative Example 7 |
| Curability | A | A | A | A | A | A | A |
| Gloss | A | A | A | A | A | B | A |
| Ad hesiveness | A | A | A | A | A | B | A |
| Water resista nce | A | A | A | A | A | A | B |

INDUSTRIAL APPLICABILITY

The polyisocyanate composition and the blocked polyisocyanate compositionaccording to the present invention are favorably used as a coating material, a fiber treatment agent, to be applied on various surfaces.

## Claims

1. A polyisocyanate composition comprising: a polyisocyanate; and a poly(oxyalkylene) alkylether phosphate, wherein the amount of the poly(oxyalkylene) alkylether phosphate satisfies the peak area ratio, relative to a bis(2-ethylhexyl)phosphate, of 0.1 to 9.6, the peak area ratio being determined by LC-MS measurement of a sample prepared by mixing equal amounts of a methanol solution comprising 0.03 g/mL of the polyisocyanate composition and a methanol solution comprising 1000 ppm by mass of the bis(2-ethylhexyl)phosphate, and
the polyisocyanate is obtained from at least one selected from the group consisting of aliphatic diisocyanates and alicyclic diisocyanates.

2. The polyisocyanate composition according to claim 1, wherein the polyisocyanate is a modified polyisocyanate obtained by reacting the polyisocyanate with a hydrophilic compound.

3. The polyisocyanate composition according to claim 2, wherein the hydrophilic compound is a poly(oxyalkylene) monoalkyl ether.

4. The polyisocyanate composition according to any one of claims 1 to 3, wherein the poly(oxyalkylene) alkylether phosphate is a poly(oxyethylene)alkyl ether phosphate.

5. The polyisocyanate composition according to claim 4, wherein the poly(oxyethylene)alkyl ether phosphate is a compound of formula (1):

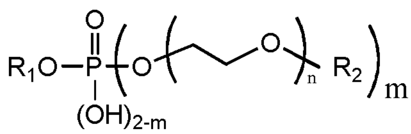

(1)

in the formula (1), $R_1$ and $R_2$ represent an alkyl or aralkyl group having 1 to 20 carbon atoms, and $R_1$ and $R_2$ are identical to or different from each other, n represents an integer of 1 to 30, and m represents 1 or 2.

**6.** The polyisocyanate composition according to claim 5, wherein $R_1$ or $R_2$ in the formula (1) represents an alkyl group having 1 to 20 carbon atoms.

**7.** The polyisocyanate composition according to any one of claims 3 to 6, wherein the poly(oxyalkylene) monoalkyl ether is a compound of formula (2):

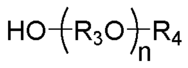

(2)

in the formula (2), $R_3$ represents an alkylene group having 1 to 4 carbon atoms, $R_4$ represents an alkyl group having 1 to 4 carbon atom, and the average number of n is 5.0 to 30.

**8.** The polyisocyanate composition according to any one of claims 3 to 7, wherein the ratio (modification ratio) of isocyanate groups modified with the poly(oxyalkylene) monoalkyl ether in the modified polyisocyanate is 0.1% to 50.0%.

**9.** The polyisocyanate composition according to any one of claims 1 to 8, wherein the amount of phosphorus atom, relative to the total mass of the polyisocyanate composition, is 1 ppm by mass to 100 ppm by mass.

**10.** A blocked polyisocyanate composition comprising:

a blocked polyisocyanate obtained by reacting a polyisocyanate with a blocking agent; and
a poly(oxyalkylene) alkylether phosphate,
wherein the amount of the poly(oxyalkylene) alkylether phosphate satisfies the peak area ratio, relative to a bis(2-ethylhexyl)phosphate, of 0.1 to 1.0, the peak area ratio being determined by LC-MS measurement of a sample prepared by mixing equal amounts of a methanol solution comprising 0.03 g/mL of the blocked polyisocyanate composition and a methanol solution comprising 1000 ppm by mass of the bis(2-ethylhexyl)phosphate, and
the polyisocyanate is obtained from at least one selected from the group consisting of aliphatic diisocyanates and alicyclic diisocyanates.

**11.** The blocked polyisocyanate composition according to claim 10, wherein the blocked polyisocyanate is obtained by reacting the polyisocyanate with a hydrophilic compound and the blocking agent.

**12.** The blocked polyisocyanate composition according to claim 11, wherein the hydrophilic compound is a poly(oxyalkylene) monoalkyl ether.

**13.** The blocked polyisocyanate composition according to any one of claims 10 to 12, wherein the poly(oxyalkylene) alkylether phosphate is a poly(oxyethylene)alkyl ether phosphate.

**14.** The blocked polyisocyanate composition according to claim 13, wherein the poly(oxyethylene)alkyl ether phosphate is a compound of formula (1):

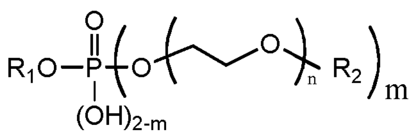

(1)

in the formula (1), $R_1$ and $R_2$ represent an alkyl or aralkyl group having 1 to 20 carbon atoms, $R_1$ and $R_2$ are identical to or different from each other, n represents an integer of 1 to 30, and m represents 1 or 2.

**15.** The blocked polyisocyanate composition according to claim 14, wherein $R_1$ or $R_2$ in formula (1) represents an alkyl

group having 1 to 20 carbon atoms.

**16.** The blocked polyisocyanate composition according to any one of claims 12 to 15, wherein the poly(oxyalkylene) monoalkyl ether is a compound of formula (2).

$$HO\left(R_3O\right)_nR_4 \qquad (2)$$

in the formula (2), $R_3$ represents an alkylene group having 1 to 4 carbon atoms, $R_4$ represents an alkyl group having 1 to 4 carbon atoms, and the average number of n is 5.0 to 30.

**17.** The blocked polyisocyanate composition according to any one of claims 10 to 16, wherein the amount of phosphorus atom, relative to the total mass of the blocked polyisocyanate composition, is 1 ppm by mass to 100 ppm by mass.

**18.** The blocked polyisocyanate composition according to any one of claims 10 to 17, wherein the blocked polyisocyanate comprises an isocyanurate group and an allophanate groups, and
the mole ratio of the allophanate group relative to the isocyanurate group is 10/90 to 90/10.

**19.** The blocked polyisocyanate composition according to any one of claims 10 to 18, wherein the polyisocyanate comprises 10% by mass to 50% by mass of an isocyanurate trimer, relative to the total mass of the polyisocyanate.

**20.** The blocked polyisocyanate composition according to any one of claims 10 to 19, wherein the blocking agent comprises at least one selected from the group consisting of oxime-based compounds, pyrazole-based compounds, active methylene-based compounds, amine-based compounds, and acid amide-based compounds.

**21.** The blocked polyisocyanate composition according to claim 20, wherein the blocking agent is a pyrazole-based compound or an oxime-based compound.

## Patentansprüche

**1.** Polyisocyanat-Zusammensetzung, umfassend: ein Polyisocyanat und ein Poly(oxyalkylen)alkyletherphosphat, wobei
die Menge des Poly(oxyalkylen)alkyletherphosphats das Peakflächenverhältnis, bezogen auf ein Bis(2-ethylhexyl)phosphat, von 0,1 bis 9,6 erfüllt, wobei das Peakflächenverhältnis durch LC-MS-Messung einer Probe bestimmt wird, die durch Mischen gleicher Mengen einer 0,03 g/mL der Polyisocyanatzusammensetzung umfassenden Methanollösung und einer 1000 ppm des Bis(2-ethylhexyl)phosphats umfassenden Methanollösung hergestellt wurde, und
das Polyisocyanat aus mindestens einem erhalten wird, ausgewählt aus der Gruppe bestehend aus aliphatischen Diisocyanaten und alicyclischen Diisocyanaten.

**2.** Polyisocyanat-Zusammensetzung nach Anspruch 1, wobei das Polyisocyanat ein modifiziertes Polyisocyanat ist, das durch Umsetzung des Polyisocyanats mit einer hydrophilen Verbindung erhalten wird.

**3.** Polyisocyanat-Zusammensetzung nach Anspruch 2, wobei die hydrophile Verbindung ein Poly(oxyalkylen)monoalkylether ist.

**4.** Polyisocyanat-Zusammensetzung nach einem der Ansprüche 1 bis 3, wobei das Poly(oxyalkylen)alkyletherphosphat ein Poly(oxyethylen)alkyletherphosphat ist.

**5.** Polyisocyanat-Zusammensetzung nach Anspruch 4, wobei das Poly(oxyethylen)alkyletherphosphat eine Verbindung der Formel (1) ist:

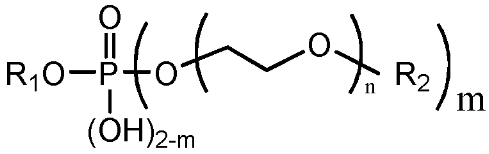

(1)

wobei in der Formel (1) $R_1$ und $R_2$ eine Alkyl- oder Aralkylgruppe mit 1 bis 20 Kohlenstoffatomen darstellen und $R_1$ und $R_2$ gleich sind oder voneinander verschieden sind, n eine ganze Zahl von 1 bis 30 darstellt und m 1 oder 2 darstellt.

**6.** Polyisocyanat-Zusammensetzung nach Anspruch 5, wobei $R_1$ oder $R_2$ in der Formel (1) eine Alkylgruppe mit 1 bis 20 Kohlenstoffatomen darstellt.

**7.** Polyisocyanat-Zusammensetzung nach einem der Ansprüche 3 bis 6, wobei der Poly(oxyalkylen)monoalkylether eine Verbindung der Formel (2) ist:

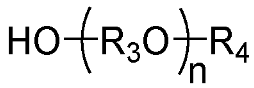

(2)

wobei in der Formel (2) $R_3$ eine Alkylengruppe mit 1 bis 4 Kohlenstoffatomen darstellt, $R_4$ eine Alkylgruppe mit 1 bis 4 Kohlenstoffatomen darstellt und die durchschnittliche Anzahl von n 5,0 bis 30 beträgt.

**8.** Polyisocyanatzusammensetzung nach einem der Ansprüche 3 bis 7, wobei der Anteil (Modifizierungsanteil) von Isocyanatgruppen, die mit dem Poly(oxyalkylen)-monoalkylether modifiziert sind, in dem modifizierten Polyisocyanat 0,1 % bis 50,0 % beträgt.

**9.** Polyisocyanat-Zusammensetzung nach einem der Ansprüche 1 bis 8, wobei die Menge an Phosphoratom, bezogen auf die Gesamtmasse der Polyisocyanat-Zusammensetzung, 1 Massen-ppm bis 100 Massen-ppm beträgt.

**10.** Blockierte Polyisocyanat-Zusammensetzung, umfassend:

ein blockiertes Polyisocyanat, das durch Umsetzen eines Polyisocyanats mit einem Blockiermittel erhalten wird; und
ein Poly(oxyalkylen)alkyletherphosphat,
wobei die Menge des Poly(oxyalkylen)alkyletherphosphats das Peakflächenverhältnis, bezogen auf ein Bis(2-ethylhexyl)phosphat, von 0,1 bis 9,6 erfüllt, wobei das Peakflächenverhältnis durch LC-MS-Messung einer Probe bestimmt wird, die durch Mischen gleicher Mengen einer 0,03 g/mL der Polyisocyanatzusammensetzung umfassenden Methanollösung und einer 1000 ppm des Bis(2-ethylhexyl)phosphats umfassenden Methanollösung hergestellt wurde, und
das Polyisocyanat aus mindestens einem erhalten wird, ausgewählt aus der Gruppe bestehend aus aliphatischen Diisocyanaten und alicyclischen Diisocyanaten.

**11.** Blockierte Polyisocyanatzusammensetzung nach Anspruch 10, wobei das blockierte Polyisocyanat durch Umsetzung des Polyisocyanats mit einer hydrophilen Verbindung und dem Blockiermittel erhalten wird.

**12.** Blockierte Polyisocyanat-Zusammensetzung nach Anspruch 11, wobei die hydrophile Verbindung ein Poly(oxyalkylen)monoalkylether ist.

**13.** Blockierte Polyisocyanat-Zusammensetzung nach einem der Ansprüche 10 bis 12, wobei das Poly(oxyalkylen)alkyletherphosphat ein Poly(oxyethylen)alkyletherphosphat ist.

**14.** Blockierte Polyisocyanat-Zusammensetzung nach Anspruch 13, wobei das Poly(oxyethylen)alkyletherphosphat eine Verbindung der Formel (1) ist:

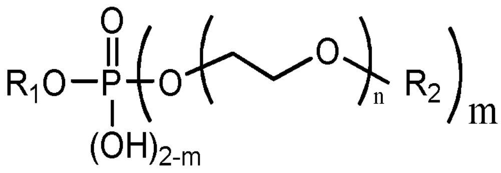

(1)

wobei in der Formel (1) $R_1$ und $R_2$ eine Alkyl- oder Aralkylgruppe mit 1 bis 20 Kohlenstoffatomen darstellen und $R_1$ und $R_2$ gleich sind oder voneinander verschieden sind, n eine ganze Zahl von 1 bis 30 darstellt und m 1 oder 2 darstellt.

**15.** Blockierte Polyisocyanat-Zusammensetzung nach Anspruch 14, wobei $R_1$ oder $R_2$ in der Formel (1) eine Alkylgruppe mit 1 bis 20 Kohlenstoffatomen darstellt.

**16.** Blockierte Polyisocyanat-Zusammensetzung nach einem der Ansprüche 12 bis 15, wobei der Poly(oxyalkylen)monoalkylether eine Verbindung der Formel (2) ist,

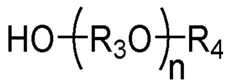

(2)

wobei in der Formel (2) $R_3$ eine Alkylengruppe mit 1 bis 4 Kohlenstoffatomen darstellt, $R_4$ eine Alkylgruppe mit 1 bis 4 Kohlenstoffatomen darstellt und die durchschnittliche Anzahl von n 5,0 bis 30 beträgt.

**17.** Blockierte Polyisocyanat-Zusammensetzung nach einem der Ansprüche 10 bis 16, wobei die Menge an Phosphoratom, bezogen auf die Gesamtmasse der blockierten Polyisocyanat-Zusammensetzung, 1 Massen-ppm bis 100 Massen-ppm beträgt.

**18.** Blockierte Polyisocyanatzusammensetzung nach einem der Ansprüche 10 bis 17, wobei das blockierte Polyisocyanat eine Isocyanuratgruppe und eine Allophanatgruppe umfasst, und
das Molverhältnis der Allophanatgruppe im Verhältnis zur Isocyanuratgruppe 10/90 bis 90/10 beträgt.

**19.** Blockierte Polyisocyanat-Zusammensetzung nach einem der Ansprüche 10 bis 18, wobei das Polyisocyanat, bezogen auf die Gesamtmasse des Polyisocyanats, 10 Massen-% bis 50 Massen-% eines Isocyanurattrimers umfasst.

**20.** Blockierte Polyisocyanat-Zusammensetzung nach einem der Ansprüche 10 bis 19, wobei das Blockiermittel mindestens eines umfasst, ausgewählt aus der Gruppe bestehend aus Verbindungen auf Oximbasis, Verbindungen auf Pyrazolbasis, Verbindungen auf Basis von aktivem Methylen, Verbindungen auf Aminbasis und Verbindungen auf Säureamidbasis.

**21.** Blockierte Polyisocyanat-Zusammensetzung nach Anspruch 20, wobei das Blockiermittel eine Verbindung auf Pyrazolbasis oder eine Verbindung auf Oximbasis ist.

## Revendications

**1.** Composition de polyisocyanate comprenant : un polyisocyanate ; et un phosphate d'éther alkylique de poly(oxyalkylène), dans laquelle
la quantité du phosphate d'éther alkylique de poly(oxyalkylène) satisfait le rapport entre aire des pics, par rapport à un phosphate de bis(2-éthylhexyle), de 0,1 à 9,6, le rapport entre aire des pics étant déterminé par mesure par CL-SM d'un échantillon préparé par mélange de quantités égales d'une solution de méthanol comprenant 0,03 g/ml de la composition de polyisocyanate et d'une solution de méthanol comprenant 1 000 ppm en masse du phosphate de bis(2-éthylhexyle), et
le polyisocyanate est obtenu à partir d'au moins un choisi dans le groupe constitué des diisocyanates aliphatiques et des diisocyanates alicycliques.

**2.** Composition de polyisocyanate selon la revendication 1, dans laquelle le polyisocyanate est un polyisocyanate modifié obtenu par réaction du polyisocyanate avec un composé hydrophile.

**3.** Composition de polyisocyanate selon la revendication 2, dans laquelle le composé hydrophile est un éther monoalkylique de poly(oxyalkylène).

**4.** Composition de polyisocyanate selon l'une quelconque des revendications 1 à 3, dans laquelle le phosphate d'éther alkylique de poly(oxyalkylène) est un phosphate d'éther alkylique de poly(oxyéthylène).

**5.** Composition de polyisocyanate selon la revendication 4, dans laquelle le phosphate d'éther alkylique de poly(oxyéthylène) est un composé de formule (1) :

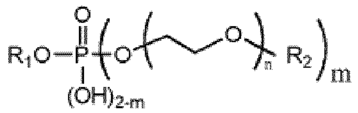

(1)

dans la formule (1), $R_1$ et $R_2$ représentent un groupe alkyle ou aralkyle comportant de 1 à 20 atomes de carbone, et $R_1$ et $R_2$ sont identiques l'un à l'autre ou différents l'un de l'autre, n représente un nombre entier de 1 à 30, et m représente 1 ou 2.

**6.** Composition de polyisocyanate selon la revendication 5, dans laquelle $R_1$ ou $R_2$ dans la formule (1) représente un groupe alkyle comportant de 1 à 20 atomes de carbone.

**7.** Composition de polyisocyanate selon l'une quelconque des revendications 3 à 6, dans laquelle l'éther monoalkylique de poly(oxyalkylène) est un composé de formule (2) :

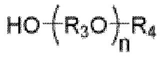

(2)

dans la formule (2), $R_3$ représente un groupe alkylène comportant de 1 à 4 atomes de carbone, $R_4$ représente un groupe alkyle comportant de 1 à 4 atomes de carbone, et le nombre moyen de n est de 5,0 à 30.

**8.** Composition de polyisocyanate selon l'une quelconque des revendications 3 à 7, dans laquelle le rapport (rapport de modification) des groupes isocyanate modifiés par l'éther monoalkylique de poly(oxyalkylène) dans le polyisocyanate modifié est de 0,1 % à 50,0 %.

**9.** Composition de polyisocyanate selon l'une quelconque des revendications 1 à 8, dans laquelle la quantité d'atome de phosphore, par rapport à la masse totale de la composition de polyisocyanate, est de 1 ppm en masse à 100 ppm en masse.

**10.** Composition de polyisocyanate à blocs comprenant :

un polyisocyanate à blocs obtenu par réaction d'un polyisocyanate avec un agent de formation de blocs ; et un phosphate d'éther alkylique de poly(oxyalkylène),
dans laquelle la quantité du phosphate d'éther alkylique de poly(oxyalkylène) satisfait le rapport entre aire des pics, par rapport à un phosphate de bis(2-éthylhexyle), de 0,1 à 1,0, le rapport entre aire des pics étant déterminé par mesure par CL-SM d'un échantillon préparé par mélange de quantités égales d'une solution de méthanol comprenant 0,03 g/ml de la composition de polyisocyanate à blocs et d'une solution de méthanol comprenant 1 000 ppm en masse du phosphate de bis(2-éthylhexyle), et
le polyisocyanate est obtenu à partir d'au moins un choisi dans le groupe constitué des diisocyanates aliphatiques et des diisocyanates alicycliques.

**11.** Composition de polyisocyanate à blocs selon la revendication 10, dans laquelle le polyisocyanate à blocs est obtenu par réaction du polyisocyanate avec un composé hydrophile et l'agent de formation de blocs.

**12.** Composition de polyisocyanate à blocs selon la revendication 11, dans laquelle le composé hydrophile est un éther monoalkylique de poly(oxyalkylène).

**13.** Composition de polyisocyanate à blocs selon l'une quelconque des revendications 10 à 12, dans laquelle le phosphate d'éther alkylique de poly(oxyalkylène) est un phosphate d'éther alkylique de poly(oxyéthylène).

**14.** Composition de polyisocyanate à blocs selon la revendication 13, dans laquelle le phosphate d'éther alkylique de poly(oxyéthylène) est un composé de formule (1) :

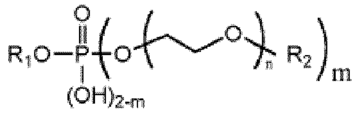

(1)

dans la formule (1), $R_1$ et $R_2$ représentent un groupe alkyle ou aralkyle comportant de 1 à 20 atomes de carbone, $R_1$ et $R_2$ sont identiques l'un à l'autre ou différents l'un de l'autre, n représente un nombre entier de 1 à 30, et m représente 1 ou 2.

**15.** Composition de polyisocyanate à blocs selon la revendication 14, dans laquelle $R_1$ ou $R_2$ dans la formule (1) représente un groupe alkyle comportant de 1 à 20 atomes de carbone.

**16.** Composition de polyisocyanate à blocs selon l'une quelconque des revendications 12 à 15, dans laquelle l'éther monoalkylique de poly(oxyalkylène) est un composé de formule (2)

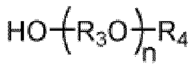

(2)

dans la formule (2), $R_3$ représente un groupe alkylène comportant de 1 à 4 atomes de carbone, $R_4$ représente un groupe alkyle comportant de 1 à 4 atomes de carbone, et le nombre moyen de n est de 5,0 à 30.

**17.** Composition de polyisocyanate à blocs selon l'une quelconque des revendications 10 à 16, dans laquelle la quantité d'atome de phosphore, par rapport à la masse totale de la composition de polyisocyanate à blocs, est de 1 ppm en masse à 100 ppm en masse.

**18.** Composition de polyisocyanate à blocs selon l'une quelconque des revendications 10 à 17, dans laquelle le polyisocyanate à blocs comprend un groupe isocyanurate et un groupe allophanate, et
le rapport molaire du groupe allophanate par rapport au groupe isocyanurate est de 10/90 à 90/10.

**19.** Composition de polyisocyanate à blocs selon l'une quelconque des revendications 10 à 18, dans laquelle le polyisocyanate comprend de 10 % en masse à 50 % en masse d'un trimère d'isocyanurate, par rapport à la masse totale du polyisocyanate.

**20.** Composition de polyisocyanate à blocs selon l'une quelconque des revendications 10 à 19, dans laquelle l'agent de formation de blocs comprend au moins un choisi dans le groupe constitué des composés à base d'oxime, des composés à base de pyrazole, des composés à base de méthylène actif, des composés à base d'amine et des composés à base d'amide d'acide.

**21.** Composition de polyisocyanate à blocs selon la revendication 20, dans laquelle l'agent de formation de blocs est un composé à base de pyrazole ou un composé à base d'oxime.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI05222150 B
- JP 2000178335 A
- JP 2006522852 PCT
- JP HEI11512772 PCT
- JP 2002511507 PCT
- JP S5734107 B
- JP S61275311 B
- JP 508 T